# EUROPEAN PATENT SPECIFICATION

(11) **EP 3 170 134 B1**
(45) Date of publication and mention of the grant of the patent: **12.08.2020**
(21) Application number: 15822850.2
(22) Date of filing: 16.04.2015
(51) Int. Cl.: G06Q 10/00, G06Q 50/10, H04L 12/28, D06F 33/00

(54) **HOME APPLIANCE AND CONTROL METHOD FOR THE SAME**
HAUSHALTSVORRICHTUNG UND STEUERUNGSVERFAHREN DAFÜR
APPAREIL DOMESTIQUE ET PROCÉDÉ DE COMMANDE ASSOCIÉ

(30) Priority: 18.07.2014 KR 20140090897
(43) Date of publication of application: 24.05.2017
(73) Proprietor: Samsung Electronics Co., Ltd., Suwon-si, Gyeonggi-do 443-742 (KR)
(72) Inventor: YANG, Hee Kyung, Suwon-si Gyeonggi-do 443-390 (KR); KANG, Seong Yong, Suwon-si Gyeonggi-do 443-803 (KR); KIM, Se Il, Seongnam-si Gyeonggi-do 463-743 (KR); JANG, Ji Hye, Cheonan-si Chungcheongnam-do 330-930 (KR); HAN, Seong Joo, Yongin-si Gyeonggi-do 448-748 (KR)
(74) Representative: Gulde & Partner
(86) International application number: PCT/KR2015/003811
(87) International publication number: WO 2016/010237

(56) References cited:
- EP-A1- 2 530 551
- JP-A- 2002 092 206
- JP-A- 2006 100 951
- KR-A- 20040 085 334
- US-A1- 2002 029 575
- US-A1- 2004 249 903
- US-A1- 2014 009 300
- US-A1- 2014 009 300
- US-A1- 2014 167 931

## Description

### [Technical Field]

The present invention relates to a failure management system that manages failures in home appliances.

### [Background Art]

Home appliances may display operation information and information about a variety of failures which are generated while performing predetermined operations by a simple error code or an acoustic signal (US 2014/0009300 A1), so that a user can determine the status of the home appliance.

However, due to this error code, the user should be aware of a repair manual in order to determine and restore the home appliance, or should contact a service center to ask for a consultation about the status of the home appliance or call a technician. EP2530551 discloses a home appliance outputting information to a user terminal which is in a bidirectional communication with an external server.

In addition, at the time of the consultation about the status of the home appliance or the call to the technician, the user should repeatedly explain effects of the failure and a failure occurrence status of the home appliance. In addition, when a failure occurrence state of the home appliance is not reproduced, it is difficult to analyze an accurate cause of the failure, and therefore there are difficulties in the repair of the failure.

### [Disclosure]

### [Technical Problem]

The present invention is directed to providing a home appliance that stores a usage log and a control method for the same.

### [Technical Solution]

One aspect of the present invention provides a home appliance according to claim 1.

Further preferred embodiments are disclosed in the dependent claims.

### [Advantageous Effects]

According to a home appliance that stores a usage log and a control method for the same, it is possible to easily perform diagnosis and a repair of a failure of the home appliance.

### [Description of Drawings]

FIG. 1 is a schematic view showing a failure management system according to an embodiment of the present invention.
FIG. 2 is a schematic view showing a failure management system according to another embodiment of the present invention.
FIG. 3 is a control block diagram showing a home appliance included in a failure management system according to an embodiment of the present invention.
FIG. 4 is a perspective view showing an appearance of a washing machine which is an example of a home appliance.
FIG. 5 is a side cross-sectional view showing a configuration of a washing machine which is an example of a home appliance.
FIG. 6 is a detailed control block diagram showing a washing machine which is an example of a home appliance.
FIG. 7 is a flowchart showing a washing process of a washing machine which is an example of a home appliance.
FIG. 8 is a flowchart showing determination of water supply quantity of a washing machine which is an example of a home appliance.
FIG. 9 is a view showing a usage log when a water supply abnormality is generated.
FIG. 10 is a view showing a repair terminal that receives a usage log.
FIG. 11 is a flowchart showing an example of transmission of failure information.
FIG. 12 is a control block diagram showing a failure management device included in a failure management system according to an embodiment of the present invention.
FIG. 13 is a view showing an example of a failure analysis database in detail.
FIG. 14 is a flowchart showing an example of manual repair in detail.
FIG. 15 is view showing an example of a screen of a user terminal in which a repair manual is displayed.
FIG. 16 is a flowchart showing an example of a remote repair in detail.
FIG. 17 is a schematic view showing a failure management system according to another embodiment of the present invention.
FIG. 18 is a flowchart showing schedule registration in a failure management system according to another embodiment of the present invention.
FIG. 19 is a flowchart showing repair policy establishment in detail.
FIG. 20 is a flowchart showing an example of step S830 of FIG. 19 in detail.
FIG. 21 is a flowchart showing a failure management method according to an embodiment of the present invention in detail.

### [Modes of the Invention]

Hereinafter, exemplary embodiments of the present invention will be described in detail. However, the present invention is not limited to the exemplary embodiments disclosed below, but can be implemented in various forms. The following exemplary embodiments are described in order to enable those of ordinary skill in the art to embody and practice the invention.

When it is determined that the detailed description of known art related to the present invention may obscure the gist of the present invention, the detailed description thereof will be omitted. The same reference numerals are used to refer to the same element throughout the specification. Terminology described below is defined considering functions in the present invention and may vary according to a user's or operator's intention or usual practice. Thus, the meanings of the terminology should be interpreted based on the overall context of the present specification.

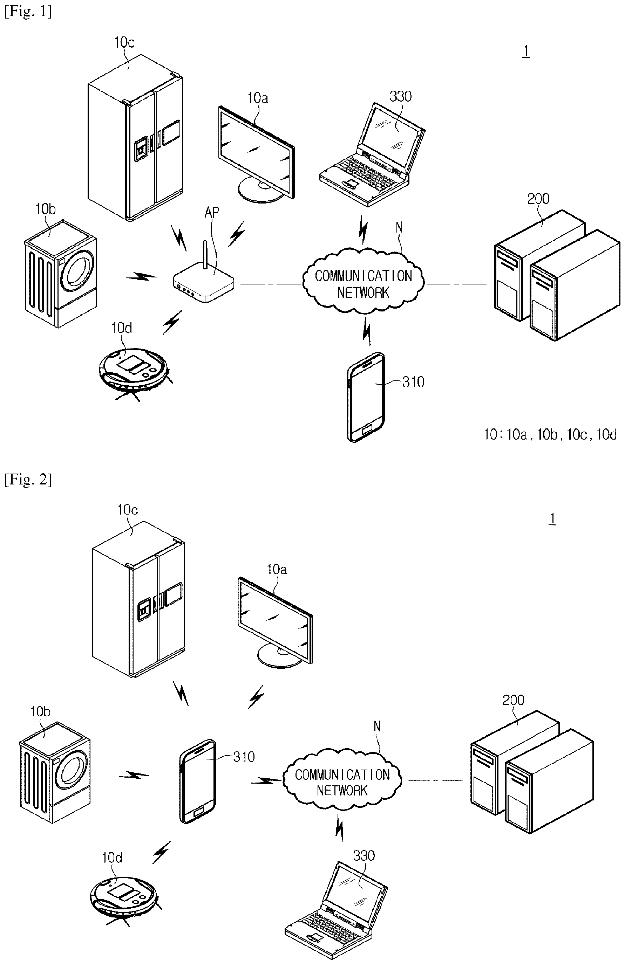

FIG. 1 is a schematic view showing a failure management system according to an embodiment of the present invention, and FIG. 2 is a schematic view showing a failure management system according to another embodiment of the present invention.

Hereinafter, components that configure a failure management system 1 according to an embodiment of the present invention will be schematically described.

As shown in FIG. 1, the failure management system 1 may include a home appliance 10 that performs a predetermined function according to a user's control command, an access point AP that connects the home appliance 10 and a communication network N, a failure management device 200 that manages the home appliance 10 through the communication network N, a user terminal 310 that provides information related to the home appliance 10 to a user, and a diagnostic terminal 330 of a service engineer.

The home appliance 10 performs a unique operation of the home appliance 10. For example, a television 10a outputs various content, a refrigerator 10c refrigerates and preserves food, a washing machine 10b washes laundry, and a robot cleaner 10d cleans a predetermined area.

Meanwhile, in FIG. 1, examples of the home appliance 10 include the television 10a, the refrigerator 10c, the washing machine 10b, and the robot cleaner 10d, but are not limited thereto. The home appliance 10 should be understood as a broad concept that includes all household electrical appliances such as air conditioners, digital products such as computers, routers, storages, and the like, and media products such as beam projectors, audio, and the like.

In addition, the home appliance 10 may manage a usage log. The home appliance 10 may accumulate and record operation information generated when driving the home appliance 10, and manage the accumulated and recorded operation information as the usage log. The usage log obtained by accumulating and recording the operation information may be used in the prevention, diagnosis, and repair of failures of the home appliance 10. The usage log will be described in more detail below.

In addition, the home appliance 10 may transmit and receive data to and from the failure management device 200 through the access point AP connected to the communication network N. For example, the home appliance 10 may transmit failure information including the usage log to the failure management device 200 through the access point AP connected to the communication network N, or receive a repair manual from the failure management device 200.

Here, the failure information may further include identification information of the home appliance 10 for identifying the home appliance 10 in which a failure occurs.

In this manner, the failure information generated by the home appliance 10 may be transmitted to other devices to be used in the diagnosis of the cause of failure of the home appliance 10 and repair of the failure of the home appliance 10. Here, the other devices may be one of the failure management device 200, the user terminal 310, and a diagnostic terminal 330.

Specifically, in order to restore the home appliance 10, diagnosis of a cause of failure occurrence is required. The usage log may include all pieces of operation information prior to the occurrence of the failure, and therefore it is possible to accurately diagnose the cause of the failure occurrence based on the operation information recorded in the usage log even without reproduction of the failure occurrence state. Thus, the usage log may be transmitted to the failure management device 200 or a diagnostic terminal 330 to be used in diagnosis and a repair of the failure. This will be described in detail below.

The access point AP may be connected to a plurality of home appliances 10 according to a wireless communication protocol to thereby form a home network.

For example, the access point AP and each of the home appliances 10 may be connected to each other by at least one protocol of a short-range communication protocol such as Bluetooth, Bluetooth low energy, infrared data association (IrDA), Zigbee, Wi-Fi, Wi-Fi direct, ultra wideband (UWB), or near field communication (NFC), or the like, and a wireless communication protocol (Wireless Broadband or the like) such as a global System for Mobile Communication (GSM)/3GPP-based communication method (GSM, HSDPA, or long term evolution (LTE) advanced), a 3GPP2-based communication method (code division multiple access (CDMA) or the like), or WiMAX.

Meanwhile, in FIG. 1, an example in which the home appliance 10 and the access point AP are connected to each other by a wireless communication method is shown, but the home appliance 10 and the access point AP may be connected to each other according to a wired communication method.

In addition, a connection method of the access point AP and each of the home appliances 10 may be determined according to a communication device included in each home appliance 10, and the access point AP may determine a communication method with each home appliance 10 according to the communication device included in each home appliance 10.

In addition, the access point AP may be connected to the communication network N according to a wired communication method, but the present invention is not limited thereto. The access point AP may be connected to the communication network N according to a wireless communication method.

Thus, the home appliance 10 connected to the access point AP and the failure management device 200 connected to the communication network N may transmit and receive data to and from each other, and the home appliance 10 may transmit and receive data to and from the user terminal 310 or the diagnostic terminal 330 connected to the communication network N through the access point AP.

Meanwhile, in FIG. 1, an example in which a home network is formed through the access point AP and the home appliance 10 is connected to the communication network N through the access point AP is shown, but a method of forming the home network is not limited thereto.

For example, as shown in FIG. 2, the home network may be formed by the user terminal 310. Specifically, each of the home appliances 10 may be connected to the user terminal 310 so that the home network may be formed by the user terminal 310.

In this instance, the user terminal 310 may transmit data having been received from the home appliance 10 to the failure management device 200 through the communication network N, and transmit data having been received from the failure management device 200 to the home appliance 10 through the communication network N.

The failure management device 200 may receive failure information from the home appliance 10 through the communication network N, and analyze a cause of failure occurrence of the home appliance 10 based on the received failure information.

That is, the failure management device 200 may perform at least one action required for enabling the home appliance 10 in which a failure occurs to be normally operated, so that all of the plurality of home appliances 10 may be normally operated. This will be described in detail below.

Referring again to FIG. 1, the user terminal 310 may be connected to the communication network N to receive various types of data from the failure management device 200 or the home appliance 10 and provide the received data to the user.

For this, the user terminal 310 may be directly connected to the communication network N to be connected to the home appliance 10 and the failure management device 200, but may be connected to the failure management device 200 via the access point AP.

Hereinafter, for convenience of description, the user terminal 310 is a smart phone, but is not limited thereto.

For example, the user terminal 310 may be an information processing device connected to the communication network N such as a desktop or a notebook, but is preferably an information processing device that can be easily carried such as a portable media player (PMP), a personal digital assistant (PDA), a tablet PC, or the like.

The diagnostic terminal 330 may receive failure information from the home appliance 10 in which a failure occurs, and provide the received failure information to a service engineer. For this, the diagnostic terminal 330 may be connected to the communication network N, the access point AP, or the home appliance 10 in which the failure occurs.

In this instance, the diagnostic terminal 330 may be a device that is produced by home appliance manufacturers, but may be a general-purpose information processing device such as a notebook, a PMP, a PDA, a tablet PC, or the like.

Hereinafter, for convenience of description, it is assumed that the diagnostic terminal 330 is a notebook, and a description thereof will follow.

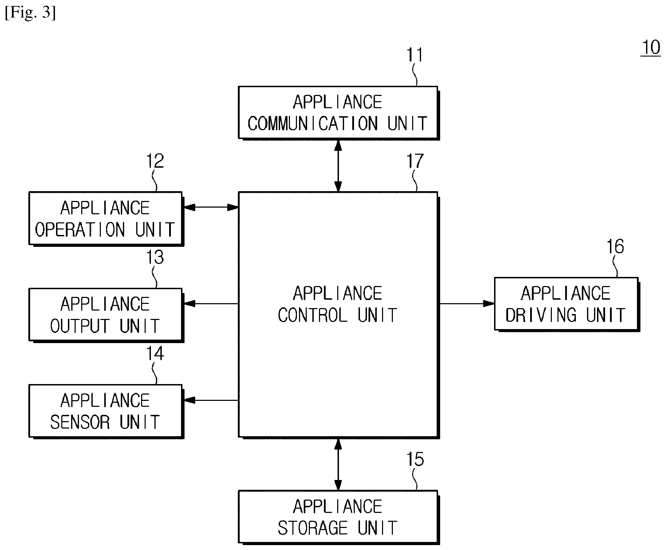

Hereinafter, the home appliance 10 of the failure management system 1 will be described in detail with reference to FIG. 3.

FIG. 3 is a control block diagram showing a home appliance included in a failure management system according to an embodiment of the present invention.

The home appliance 10 according to an embodiment of the present invention may include an appliance communication unit 11 that transmits and receives data to and from other devices, an appliance operation unit 12 that receives a control command from a user, an appliance output unit 13 that provides information related to the home appliance 10, an appliance sensor unit 14 that detects a status of the home appliance 10, an appliance storage unit 15 that stores data related to driving of the home appliance 10, an appliance driving unit 16 that performs a unique operation of the home appliance 10, and an appliance control unit 17 for overall control of the home appliance 10.

The appliance communication unit 11 is connected to other external devices to transmit and receive data to and from the other external devices. Specifically, the appliance communication unit 11 may be connected to the external device by at least one method of a wired communication method, a wireless communication method, a short-range communication method, and a port communication method, thereby transmitting failure information including the usage log to the external device.

Here, the external device may be one of another home appliance 10 that configures a home network, the user terminal 310 of the user, the diagnostic terminal 330 used for diagnosis of the home appliance 10, and the failure management device 200.

In addition, a repair manual for the repair of the failure, a control signal, or the like may be received from the external device connected through the appliance communication unit 11. In addition, the appliance communication unit 11 may set a control session in order to receive a predetermined control command from the failure management device 200 or the user terminal 310.

Here, the control session refers to a logical connection for control signal exchange between the external device and the home appliance 10. The failure management device 200 or the user terminal 310 may transmit a control signal through the control session, thereby controlling remotely the home appliance 10.

The appliance operation unit 12 may receive a control command for controlling the driving of the home appliance 10 from the user, and generate and output an electrical signal corresponding to the received control command.

The appliance operation unit 12 may be implemented as a button input unit such as a push button or membrane button or a touch input unit such as a touch pad or the like, but is not limited thereto. For example, the appliance operation unit 12 may be implemented as an input unit such as a dial or the like.

The appliance output unit 13 provides various types of information related to the home appliance 10 to the user. For example, the appliance output unit 13 may provide setting information or driving status information of the home appliance 10 to the user. In addition, the appliance output unit 13 may provide a repair manual for the repair of the failure to the user. In this instance, the repair manual may be stored in the appliance storage unit 15, or may be received from the external device of the home appliance 10.

The appliance output unit 13 may be implemented as a display unit such as a liquid crystal display (LCD) panel, a light emitting diode (LED) panel, or an organic light emitting diode (OLED), or an audio output unit such as a speaker, but is not limited thereto.

In addition, the appliance operation unit 12 and the appliance output unit 13 may be implemented as a touch screen panel (TSP) in which a touch recognition unit for detecting a user's contact and a display unit for displaying driving information to a user are integrated.

The appliance sensor unit 14 may detect a status of the home appliance 10, and transmit a status signal corresponding to the status of the home appliance 10 to the appliance control unit 17. The appliance sensor unit 14 included in the individual home appliances 10 may be mutually different depending on the type or model of the home appliance 10. For example, when the home appliance 10 is the refrigerator 10c, the appliance sensor unit 14 may detect a temperature of each of a refrigerator compartment and a freezer compartment.

The appliance storage unit 15 stores data required for driving of the home appliance 10. In addition, the usage log may be stored in the appliance storage unit 15 according to control of the appliance control unit 17.

In addition, the appliance storage unit 15 may store a control program. The control program is a program for controlling the driving of the home appliance 10 according to a predetermined logic, and the appliance control unit 17 may control the home appliance 10 according to the control program. For example, the appliance storage unit 15 of the washing machine 10b may store a control program for adjusting the temperature of the refrigerator compartment and the freezer compartment.

In addition, in the appliance storage unit 15, a program capable of coping with failures such as a self-diagnosis program or a self-repair program may be stored.

Here, the self-diagnosis program is a program for diagnosing a failure state of the home appliance 10, and the self-repair program is a program for repairing the failure state of the home appliance 10.

In this instance, the appliance storage unit 15 may include a volatile memory such as a DRAM or an SRAM that arbitrarily stores arbitrary data generated in a process of controlling operations of the home appliance 10 as well as a non-volatile memory such as a magnetic disc or a solid state disk.

Meanwhile, the appliance storage unit 15 may be implemented as a removable storage device in the home appliance 10, thereby providing mobile convenience of the usage log. For example, the appliance storage unit 15 may be implemented as a removable storage device such as an external hard drive, a micro SD, or the like. This will be described in detail below.

The appliance driving unit 16 drives the home appliance 10 to perform its unique operation. The appliance driving unit 16 may be changed depending on the type or model of the home appliance 10.

The appliance control unit 17 performs overall control of the home appliance 10. Specifically, the appliance control unit 17 may control the appliance driving unit 16 so that the home appliance 10 is driven according to the control command of the user.

In this instance, the appliance control unit 17 may correspond to one or a plurality of processors. In this instance, the processor may be implemented as an array of a plurality of logic gates, or as a combination of a general-purpose microprocessor and a memory in which a program capable of being executed by the general-purpose microprocessor is stored. In addition, it can be understood by those skilled in the art that the processor may be implemented in other forms of hardware.

In addition, the appliance control unit 17 may determine whether a failure occurs. That is, the appliance control unit 17 may determine that the failure occurs when the home appliance 10 is not normally driven according to the control program. In this instance, whether the home appliance 10 is normally driven may be determined based on the status of the home appliance 10 which is detected through the appliance sensor unit 14.

In addition, the appliance control unit 17 may manage a usage log of the home appliance 10. Specifically, the appliance control unit 17 may manage the usage log by accumulating and recording operation information which is generated according to the driving of the home appliance 10.

Here, the operation information may include at least one of input information of the control command of the user which is input to the usage log through the appliance operation unit 12, status information of the home appliance 10 which is detected by the appliance sensor unit 14, driving information performed according to a driving program, and debugging information acquired by performing debugging of firmware for driving of the home appliance. Meanwhile, the debugging information may be acquired by performing debugging at a predetermined time interval, but it may also be acquired by performing debugging of the firmware when a failure occurs.

In addition, a generation time together with the operation information may be recorded in the usage log.

In addition, the appliance control unit 17 may continuously record the usage log of the home appliance 10 starting from initial driving of the home appliance 10. In this manner, when the usage log is accumulated and recorded starting from the initial driving of the home appliance 10, it is possible to acquire information such as a total number of times of use of the home appliance 10, a total use time of the home appliance 10, and the like from the usage log, and whether a failure of hardware occurs may be diagnosed according to the acquired information.

However, in order to efficiently use the limited resources of the home appliance 10, the usage log may be partially deleted or initialized. Specifically, the appliance control unit 17 may initialize the usage log according to a predetermined input, or initialize the usage log at time points set in advance.

For example, the appliance control unit 17 may initialize the usage log when the home appliance 10 is normally driven and then turned off, or whenever the home appliance 10 is turned on.

In addition, the appliance control unit 17 may manage the usage log to a predetermined size. The usage log may be sequentially accumulated according to generation of the operation information and recorded. Thus, the appliance control unit 17 may manage the usage log to the predetermined size by deleting the recorded operation information which is generated before a predetermined point of time.

As another example, the appliance control unit 17 may manage the usage log according to a first-in first-out (FIFO) method. Specifically, when data stored in the usage log reaches the predetermined size, the appliance control unit 17 deletes the previously generated operation information and records newly generated operation information.

In addition, when occurrence of a failure of the home appliance 10 is detected, the appliance control unit 17 may stop recording of the operation information.

Meanwhile, the usage log managed by the appliance control unit 17 may be stored in the appliance storage unit 15, and the appliance control unit 17 may update the usage log stored in the appliance storage unit 15 whenever operation information is generated.

In addition, the usage log may be temporarily stored in the appliance control unit 17, and moved to and stored in the appliance storage unit 15 when a failure occurs. For example, the usage log may be temporarily stored in a register provided in the appliance control unit 17 to be managed, and the appliance control unit 17 may control the usage log temporarily stored in the register to be stored in the appliance storage unit 15 when a failure occurs.

When a failure occurs, the appliance control unit 17 may self-diagnose a cause of the failure to attempt to repair the failure. Specifically, when the failure occurs, the appliance control unit 17 may diagnose the cause of the failure by performing a diagnostic program, and attempt to repair the failure by performing a repair program.

In addition, the appliance control unit 17 may notify a user of occurrence of the failure, the cause of the failure, and a failure repair through the appliance output unit 13, or notify the user terminal 310 or the failure management device 200 of the occurrence of the failure and the failure repair.

In addition, the appliance control unit 17 may transmit failure information including the usage log to the diagnostic terminal 330 connected through the appliance communication unit 11.

In this manner, the failure information may be transmitted to other devices, and therefore the other devices may also easily diagnose the cause of the failure.

As described above, the home appliance 10 of the failure management system 1 may include a variety of products such as household electrical appliances, digital products, media products, and the like. However, for specific description of the failure management system 1, the washing machine 10b will be hereinafter described as a typical example of the home appliance 10.

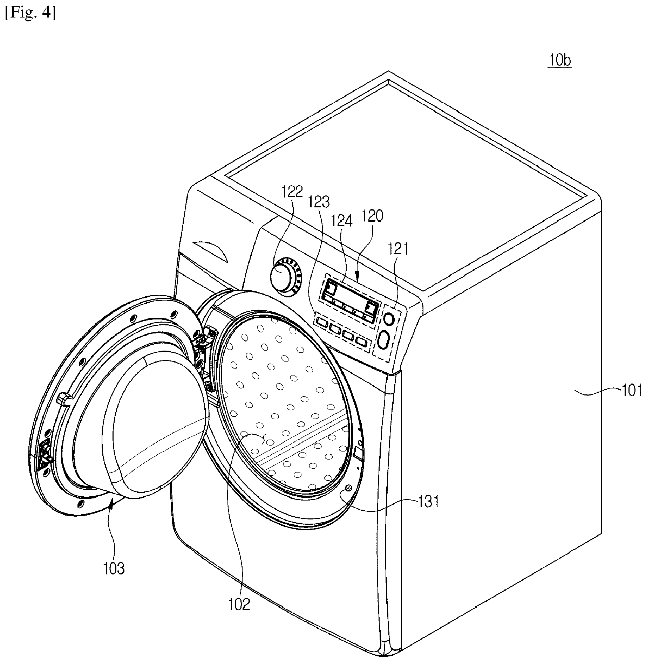

FIG. 4 is a perspective view showing an appearance of a washing machine which is an example of a home appliance.

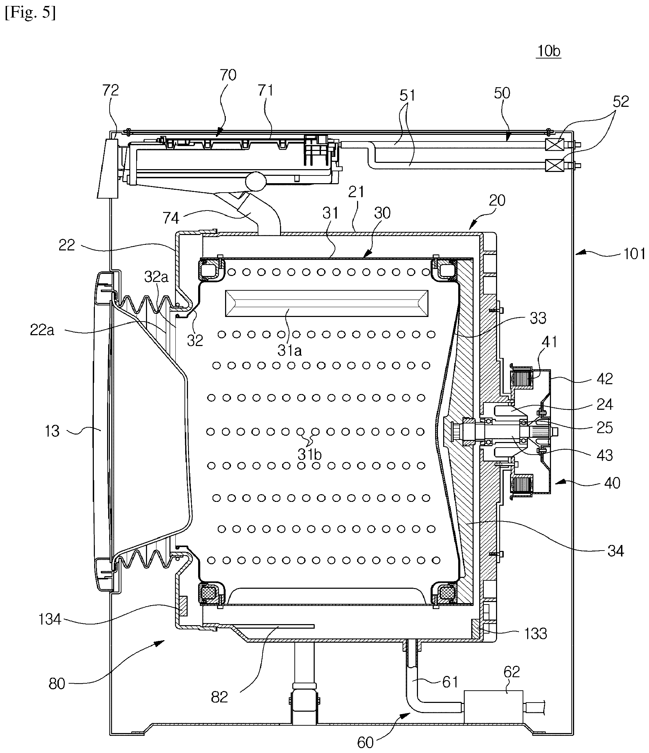

FIG. 5 is a side cross-sectional view showing a configuration of a washing machine which is an example of a home appliance.

Referring to FIGS. 4 and 5, the washing machine 10b includes a cabinet 101 that forms an appearance of the washing machine 10b, a tub 20 that receives water (washing water or rinsing water) used for washing, and a drum 30 that washes laundry while being rotated.

In addition, the washing machine 10b may include a drum motor 40 that rotates the drum 30, a water supply unit 50 that supplies water to the tub 20, a drainage unit that discharges the water received in the tub 20, a detergent supply unit 70 that supplies a detergent, and a water temperature adjusting unit 80 that adjusts a temperature of water inside the tub 20.

A laundry loading port 102 through which laundry is loaded or unloaded is provided in a front center of the cabinet 101, and a door 103 that opens or closes the laundry loading port 102 is provided in the laundry loading port 102. The door 103 is rotatably mounted to the cabinet 101 by a hinge, and is not easily opened by a hook when the laundry loading port 102 is closed.

In addition, in a front upper portion of the cabinet 101, a control panel 120 that receives an operation command for the washing machine 10b from a user and displays operation information of the washing machine 10b is provided. The control panel 120 may further include a plurality of operation buttons and dials that receive operation commands for the washing machine 10b.

Specifically, the control panel 120 may include a power button that turns on and off power of the washing machine 10b, operation buttons 121 that operate the washing machine 10b or stop the operation of the washing machine 10b, a dial 122 that selects a washing course in which detailed settings of a washing process, a rinsing process, and a dehydrating process are stored in advance, according to the type of the laundry, and detailed setting buttons 123 that set details of the washing course selected by the dial 122. For example, a user may adjust or change the details such as a water temperature of the washing course, the number of times of rinsing, a dehydrating strength, and the like through the detailed setting buttons 123.

In this instance, a plurality of operation buttons such as the power button, the operation buttons 121, and the detailed setting buttons 123 may employ micro switches, membrane switches, a touch pad, or the like.

The control panel 120 includes a display panel 124 that displays operation information of the washing machine 10b. The display panel 124 may display the washing course selected by the dial 122, detailed settings selected by the detailed setting buttons 123, information about a process performed by the washing machine 10b, a time remaining to completion of washing, and the like.

Such display panel 124 may employ an LCD panel, an LED panel, or an OLED panel. In addition, the control panel 120 may employ a TSP panel in which a touch pad for receiving an operation command from a user and a display panel for displaying operation information of the washing machine 10b are integrated.

The tub 20 is provided inside the cabinet 101, and includes a cylindrical tub body 21 with a closed rear surface, and a tub front plate 22 that is disposed in a front portion of the tub body 21. On the rear surface of the tub body 21, a bearing 25 that rotatably fixes the drum motor 40 to be described below and a bearing housing 24 are provided, and on the tub front plate 22, an opening 22a through which laundry is loaded or unloaded to or from the inside of the drum 30 is provided.

In addition, the tub 20 is connected to the water supply unit 50 and the detergent supply unit 70 through a connection pipe 74 provided above the tub 20, and connected to the drainage unit 60 through a drainage pipe 61 provided below the tub 20.

The drum 30 is rotatably provided inside the tub 20, and includes a cylindrical drum body 31, a drum front plate 32 that is provided on a front side of the drum body 31, and a drum rear plate 33 that is provided on a rear side of the drum body 31.

On an inner surface of the drum body 31, a through-hole 31b through which water received in the tub 20 is introduced into the drum 30 and a lifter 31a that pulls laundry upward are provided. The opening 22a through which laundry is loaded or unloaded to or from the inside of the drum 30 is provided on the drum front plate 32, and a flange 34 to which the drum motor 40 for rotating the drum 30 is connected is provided on the drum rear plate 33.

The drum motor 40 includes a stator 41 that is fixed on a rear surface of the tub 20, a rotor 42 that rotates through a magnetic interaction with the stator 41, a rotary shaft 43 whose one side is connected to the rotor 42 and whose other side passes through the rear surface of the tub 20 and is connected to the flange 34 provided on the rear surface of the drum 30, and a Hall sensor 45 that detects rotational displacement of the rotor 42. In addition, the rotary shaft 43 is rotatably fixed to the tub 20 by the bearing 25 and the bearing housing 24 which are provided on the rear surface of the tub 20 as described above.

Such the drum motor 40 may employ a brushless direct current (BLDC) motor whose rotational speed is easily controlled, a synchronous alternating current (AC) motor, or the like.

The water supply unit 50 is provided above the tub 20, and includes a water supply pipe 51 that connects an external water supply source (not shown) and the detergent supply unit 70 to be described below and a water supply valve 52 that is provided on the water supply pipe 51 to open and close the water supply pipe 51. The water supply valve 52 may employ a solenoid valve that opens and closes the water supply pipe 51 according to electrical signals.

The drainage unit 60 is provided below the tub 20, and includes a drainage pipe 61 that guides water of the tub 20 to be discharged to the outside of the cabinet 101 and a drainage pump 62 that is disposed in the drainage pipe 61 to enable water to be discharged through the drainage pipe 61.

That is, water supplied by the water supply unit 50 is received in the tub 20 via the detergent supply unit 70 to be used in the washing of laundry, and contaminated washing water is discharged to the outside of the cabinet 101 by the drainage unit 60. A water level of the water received in the tub 20 is detected through a water level sensor 133.

The detergent supply unit 70 is provided above the tub 20, and is connected to the tub 20 through the connection pipe 74. In addition, the detergent supply unit 70 may include a detergent container 71 that stores a washing detergent and a rinsing detergent and a detergent container housing 72 that accommodates the detergent container 71.

Thus, the detergent is supplied to the tub 20 together with the water supplied from the water supply unit 50 by the detergent supply unit 70.

The water temperature adjusting unit 80 is provided below the tub 20, and includes a heater that heats water received in the tub 20 and a water temperature sensor 134 that detects a temperature of the water received in the tub 20. As the water temperature sensor 134, a thermistor in which an electrical resistance value is changed according to a temperature of the water temperature sensor 134 may be employed.

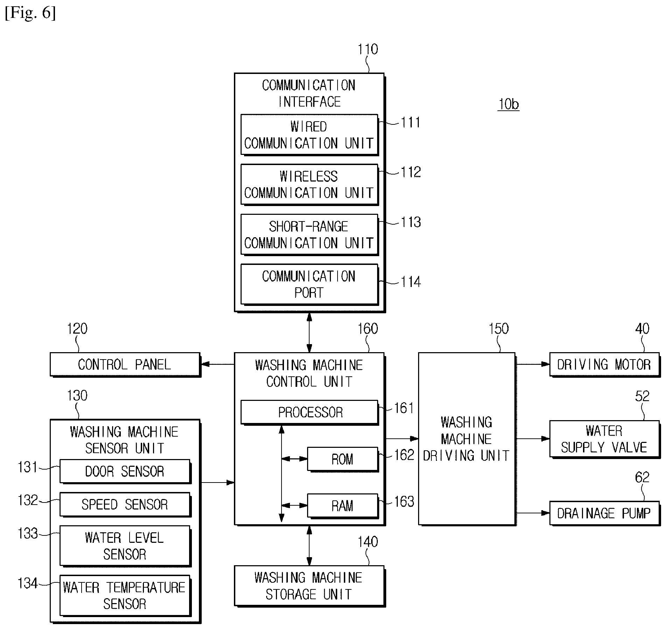

FIG. 6 is a detailed control block diagram showing a washing machine which is an example of a home appliance.

As shown in FIG. 6, a washing machine 10b may include a communication interface 110 that transmits and receives data to and from an external device, a control panel 120 that receives a control command from a user and displays information related to the washing machine 10b, a washing machine sensor unit 130 that detects a status of the washing machine 10b, a washing machine storage unit 140 that stores data for driving of the washing machine 10b, a washing machine driving unit 150 that controls each component of the washing machine 10b according to control of a control unit, and a washing machine control unit 160 that controls overall operations of the washing machine 10b.

The communication interface 110 is connected to an external device to transmit and receive data to and from the external device. Specifically, the communication interface 110 may transmit failure information including a usage log to the external device, or receive a repair manual for the repair of a failure, control signals, and the like from the external device.

Specifically, the communication interface 110 may further include a wired communication unit 111. The wired communication unit 111 is connected to the external device through a wired cable to transmit and receive data according to a wired protocol.

In addition, the communication interface 110 may further include a wireless communication unit 112. The wireless communication unit 112 may be connected to the external device according to a wireless protocol to transmit and receive data. For example, the wireless communication unit 112 may transmit and receive data to and from the external device through a wireless communication protocol such as GSM, CDMA, wideband CDMA (WCDMA), time division multiple access (TDMA), or LTE.

In addition, the communication interface 110 may further include a short-range communication unit 113. The short-range communication unit 113 may be connected to the adjacent external device according to a short-range communication protocol to transmit and receive data. For example, the short-range communication unit 113 may transmit and receive content signals to and from the external device through a short-range protocol such as Bluetooth, Bluetooth low energy, IrDA, Zigbee, Wi-Fi, Wi-Fi Direct, UWB, NFC, or the like.

In addition, the communication interface 110 may further include a communication port 114. The communication port 114 may be connected to other devices through a connector. In this instance, the communication port 114 may be one of a serial port that transmits and receives data in a single bit unit at a time, a parallel port enabling parallel transfer of data, and a Universal Serial Bus (USB).

The control panel 120 may receive a control command from a user, or display information related to driving of the washing machine 10b. The user may input the control command of the washing machine 10b using operation buttons 121, a dial 122, or detailed setting buttons 123, and the control panel 120 may output input signals corresponding to the control command input by the user.

In addition, the control panel 120 may display a variety of information related to driving of the washing machine 10b using the display panel 124. In particular, the display panel 124 may display the occurrence of a failure of the washing machine 10b or display a repair manual for the repair of the failure.

The washing machine sensor unit 130 detects a status of the washing machine 10b, and outputs status signals corresponding to the status of the washing machine 10b. The washing machine sensor unit 130 may include a door sensor 131, a speed sensor 132, a water level sensor 133, and a water temperature sensor 134.

Specifically, the door sensor 131 may detect opening and closing of a door 103. For example, the door sensor 131 may be provided on a front surface of an opening 22a to detect a contact with the door 103 or detect whether the door 103 is opened or closed by measuring a distance from the door 103 using infrared rays, ultrasonic waves, or the like.

The speed sensor 132 may detect a rotational speed of a drum 30. For example, the speed sensor 132 may include a Hall sensor that detects rotational displacement of a rotor 42. In this instance, the speed sensor 132 may calculate the rotational displacement per unit time to detect the rotational speed of the drum 30.

The water level sensor 133 may detect a water quantity received in the tub 20. For example, the water level sensor 133 may be provided on a bottom surface of the tub 20 to measure a water pressure and detect the water quantity received in the tub 20 based on the measured water pressure.

The water temperature sensor 134 may detect a temperature of the water received in the tub 20.

The washing machine storage unit 140 stores various types of data and programs required for driving of the washing machine 10b. In particular, the washing machine storage unit 140 may store a usage log.

In addition, the washing machine storage unit 140 may be implemented as a removable storage device such as a micro SD card, a USB memory, an external hard drive, or the like so that the washing machine storage unit 140 can be easily removed from the washing machine 10b, and when the washing machine storage unit 140 is implemented as the removable storage device, a user or a service engineer may remove the washing machine storage unit 140 from the washing machine 10b, thereby acquiring the usage log stored in the washing machine storage unit 140.

The washing machine driving unit 150 drives each component of the washing machine 10b according to the control signals of the washing machine control unit 160.

Specifically, the washing machine driving unit 150 may apply a current to a drum motor 40 so that the drum 30 can be rotated according to the control signal. In this instance, the rotational speed of the drum may be controlled by adjusting a magnitude of the current applied to the drum motor 40 or an application time of the current.

In order to drive the drum motor 40, the driving unit 150 may include an intelligent power module (IPM) that is configured of an inverter including a plurality of insulating gate bipolar transistors (IGBTs) and is connected to the drum motor 40 with three phases (U/V/W).

In addition, the washing machine driving unit 150 may control water supply by adjusting opening and closing of the water supply valve 52 according to the control signals, and control water drainage by adjusting driving of the drainage pump 62.

The washing machine control unit 160 controls overall operations of the washing machine 10b. The washing machine control unit 160 may include a processor 161, a ROM 162 in which firmware for control of the washing machine 10b is stored, and a RAM 163 that temporarily stores signals or data generated from the driving of the washing machine 10b or is used as a storage area corresponding to various tasks in which washing is performed.

In this instance, the firmware may further include a control program required for driving of the washing machine 10b, and the processor 161 may adjust driving of the washing machine 10b according to the control program.

Specifically, the washing machine control unit 160 outputs control signals to the washing machine driving unit 150 so that a washing process that separates contaminants from the laundry in a washing water in which a detergent is dissolved according to a control command, a rinsing process that rinses a residual detergent from the laundry using a rinsing water not including the detergent, a dehydrating process that removes moisture contained in the laundry by high-speed rotation, and the like are performed.

In addition, the washing machine control unit 160 may determine that a failure occurs when the washing machine 10b is not normally driven according to the control program, or when an abnormality is detected by the washing machine sensor unit 130. For example, when water supply or drainage is not completed within a preset time, the washing machine control unit 160 may determine that a failure occurs.

When the failure occurs in this manner, the washing machine control unit 160 may diagnose a cause of the failure according to a diagnostic program, and control the control panel 120 to display an error code corresponding to the cause of the failure.

In addition, the washing machine control unit 160 may attempt to repair the failure by driving a repair program. In this instance, the washing machine control unit 160 may debug firmware to generate debugging information, and record the generated debugging information in the usage log.

Meanwhile, the washing machine control unit 160 may output failure information to the outside of the home appliance 10 when a failure occurs. Specifically, the washing machine control unit 160 may transmit the failure information including the usage log to at least one of the failure management device 200, the user terminal 310, and the diagnostic terminal 330 in order to repair the failure.

For this, the washing machine control unit 160 may manage the usage log according to operation information generated in the washing process. In this instance, the usage log may be continuously accumulated and managed since the launch of the washing machine 10b. However, only operation information generated from turn-on of the washing machine 10b up to an occurrence of an error of the washing machine 10b may be accumulated and recorded in the usage log in consideration of limited resources of the washing machine 10b. For this, the usage log may be periodically initialized whenever turn-on or turn-off occurs.

In addition, the usage log may be stored and managed in the washing machine storage unit 140. However, in consideration of the limited resources of the washing machine 10b, the usage log may be temporarily stored in the RAM 163 of the washing machine control unit 160. In this manner, only when a failure occurs, the usage log temporarily stored in the RAM 163 may be moved to the washing machine storage unit 140.

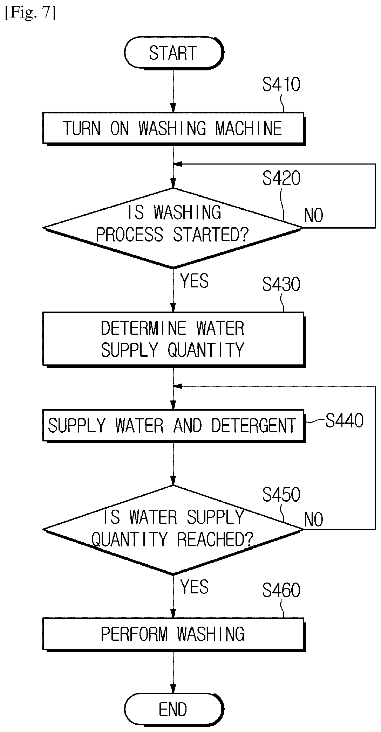

Specifically, the washing machine control unit 160 may sequentially record at least one of input information of the control command input from the control panel 120, status information of the washing machine detected by the washing machine sensor unit 130, and information about driving performed according to the control program, thereby managing the usage log. Hereinafter, an example of the usage log will be described in detail with reference to FIGS. 7 to 9.

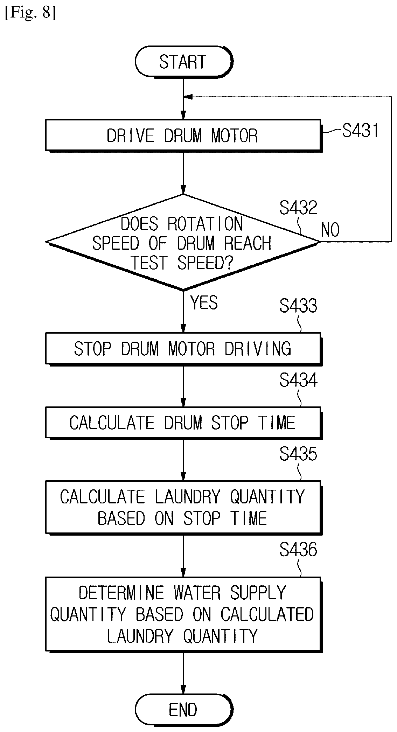

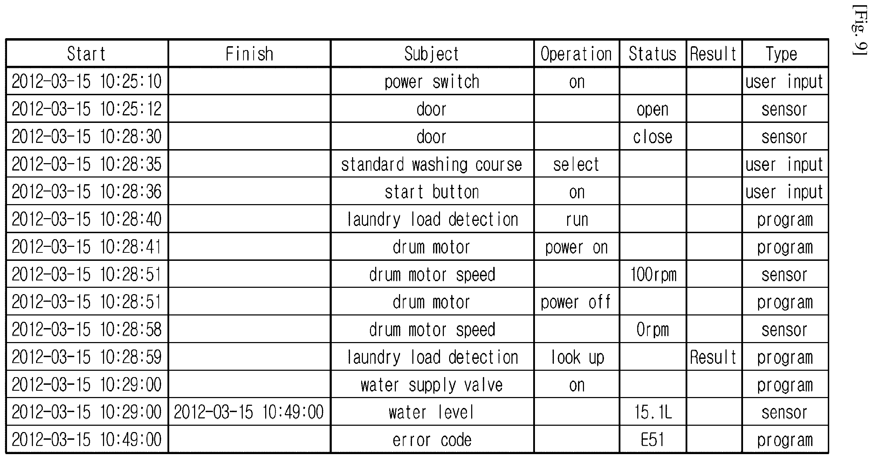

FIG. 7 is a flowchart showing a washing process of a washing machine which is an example of a home appliance, FIG. 8 is a flowchart showing determination of a water supply quantity of a washing machine which is an example of a home appliance, and FIG. 9 is a view showing a usage log when a water supply abnormality is generated.

As shown in FIG. 7, when power of the washing machine 10b is turned on through the control panel 120 in step S410, the washing machine 10b determines whether a washing process starts in step S420. In this instance, the washing process may start by an input of the operation buttons 121. In this instance, a user may select a washing course through the dial 122 before the start of the washing process, and set details of the washing course through the detailed setting buttons 123.

In step S430, when the washing process starts, the washing machine 10b may determine a supply water quantity to be supplied to the tub 20. The supply water quantity may be determined based on a weight of laundry.

Specifically, referring to FIG. 8, in step S431, the washing machine 10b drives the drum motor 40. In step S432, the washing machine 10b determines whether a rotational speed of the drum 30 reaches a test speed. The washing machine 10b may drive the drum motor 40 by applying a current to the drum motor 40 until the rotational speed of the drum 30 reaches the test speed.

When the rotational speed of the drum 30 reaches the test speed, the washing machine 10b stops the driving of the drum motor 40 in step S433, and calculates a stop time of the drum 30 in step S434.

In step S435, the washing machine 10b may calculate a laundry quantity based on the stop time. The stop time of the drum 30 may be changed depending on the laundry quantity. Specifically, even when the driving of the drum motor 40 is stopped, the drum 30 and the laundry are likely to maintain a rotational motion by rotational inertia. In this instance, the moment of inertia of the drum 30 is further increased along with an increase in the laundry quantity, and the drum 30 maintains the rotational motion for a longer period of time along with an increase in the moment of inertia. That is, a time during which the drum 30 is stopped is proportional to the laundry quantity.

In step S436, the washing machine 10b may determine the supply water quantity based on the calculated laundry quantity. That is, the laundry quantity is proportional to the stop time of the drum 30, and therefore it is possible to calculate the laundry quantity based on the stop time of the drum 30, and determine the supply water quantity to be suitable for the calculated laundry quantity.

In order to determine the supply water quantity, the washing machine 10b may further include a lookup table concerning the supply water quantity according to the stop time, and also determine the supply water quantity based on the lookup table.

Meanwhile, when the supply water quantity is determined by a user before the start of the washing process, the determining of the supply water quantity may be omitted.

Referring again to FIG. 7, in step S440, the washing machine 10b may perform water and detergent supply according to the determined supply water quantity. Specifically, the washing machine 10b supplies water to the tub 20 by opening the water supply valve 52. In this instance, water is supplied to the tub 20 via the detergent supply unit 70 so that water is supplied to the tub 20 together with a detergent. In addition, the washing machine 10b may rotate the drum 30 in order to mix the water and the detergent.

The washing machine 10b determines whether the supply water quantity is reached in step S450, and performs water and detergent supply until a corresponding water quantity reaches the supply water quantity.

In step S460, when the corresponding water quantity reaches the supply water quantity, the washing machine 10b performs washing. Specifically, the washing machine 10b rotates the drum, and washes laundry using frictional force caused by the rotation of the drum.

The usage log shown in FIG. 9 may be acquired while the above-described washing process is performed.

Specifically, referring to FIG. 9, when a turn-on input of the power button is received from the control panel 120, the washing machine control unit 160 may record an input information reception time (2012-03-15 10:25:10) together with the turn-on input of the power switch . In this instance, a type (user input) of operation information may be also recorded in the usage log.

The door sensor 131 detects an open state of a door, and transmits the detected open state of the door to the washing machine control unit 160. The washing machine control unit 160 having received the open state of the door may record, in the usage log, the open state of the door together with a status information reception time (2012-03-15 10:25:12) and a type (sensor) of operation information.

Next, when the door is closed by the user, the door sensor 131 detects a closed state of the door and transmits the detected closed state of the door to the washing machine control unit 160. The washing machine control unit 160 having received the closed state of the door may accumulate and record the closed state of the door, the status information reception time (2012-03-15 10:28:30), and the type (sensor) of operation information in the usage log.

Next, when a standard washing course is selected by the user, the control panel 120 transmits a standard washing course-selection input to the washing machine control unit 160. The washing machine control unit 160 having received the standard washing course-selection input accumulates and records the standard washing course-selection input, an input reception time (2012-03-15 10:28:35), and a type (user input) of operation information in the usage log.

Next, when a washing start command is input by the user, the control panel 120 transmits a start input to the washing machine control unit 160. The washing machine control unit 160 having received the start input accumulates and records the start input, an input information reception time (2012-03-15 10:28:36), and the type (user input) of operation information in the usage log.

The washing machine control unit 160 having received the start command starts a washing process according to the control program. Specifically, the washing machine control unit 160 starts measurement of an laundry quantity according to the control program, and records a laundry quantity measurement time, a measurement start time (2012-03-15 10:28:40), and a type (program) of operation information in the usage log.

The washing machine control unit 160 drives the drum motor 40 by supplying a current to the drum motor 40. In this instance, the washing machine control unit 160 records power supply of the drum motor 40, a power supply start time (2012-03-15 10:28:41), and the type (program) of operation information.

When power is supplied to the drum motor 40, the washing machine control unit 160 monitors a rotational speed of the drum detected by the speed sensor 132, and continuously applies a driving current to the drum motor 40 until the monitored rotational speed of the drum reaches a test speed (for example, 100 rpm).

The washing machine control unit 160 monitors the speed sensor 132 to determine whether the rotational speed of the drum reaches the test speed. When the rotational speed of the drum reaches the test speed, the washing machine control unit 160 may accumulate and record, in the usage log, the test speed (100 rpm), a test time reaching time (2012-03-15 10:28:51), and the type (sensor) of operation information.

In addition, when the rotational speed of the drum reaches the test speed, the washing machine control unit 160 stops driving of the drum motor 40 by stopping the supply of current to the drum motor 40. The washing machine control unit 160 records a power supply stop of the drum motor 40, a power supply stop time (2012-03-15 10:28:51), and the type (program) of operation information.

The driving of the drum motor 40 is stopped, and the washing machine control unit 160 detects the stop of the drum by monitoring the speed sensor 132. When the drum is stopped, the washing machine control unit 160 may accumulate and record, in the usage log, a drum stop, a drum stop time (2012-03-15 10:28:58), and the type (sensor) of operation information.

In addition, the washing machine control unit 160 may calculate a time difference between a driving stop time of the drum motor 40 and a stop time of the drum, and determine a laundry quantity based on the calculated time difference. Specifically, the washing machine control unit 160 may search for a laundry quantity corresponding to the calculated time difference with reference to the lookup table stored in advance, thereby determining the laundry quantity.

In this instance, the washing machine control unit 160 may accumulate and record, in the usage log, the laundry quantity (5.8 kg) determined by retrieving the lookup table, a laundry quantity determination time (2012-03-15 10:28:59), and the type (program) of operation information.

The washing machine control unit 160 performs water and detergent supply depending on the determined laundry quantity. In this instance, the washing machine control unit 160 may accumulate and record, in the usage log, a turn-on of the water supply valve, a turn-on time (2012-03-15 10:29:00) of the water supply valve, and the type (program) of operation information.

When water supply starts, the washing machine control unit 160 monitors a water level detected by the water level sensor 133. When water supply starts and is not completed until a predetermined time (for example, 20 minutes) passes, the washing machine control unit 160 may accumulate and record, in the usage log, a water level (15.1 L) currently detected by the water level sensor 133, a monitoring start time (2012-03-15 10:29:00) of the water level sensor 133, a monitoring end time (2012-03-15 10:49:00) of the water level sensor 133, and the type (sensor) of operation information.

In this manner, when water supply is not completed until the predetermined time passes, the washing machine control unit 160 may diagnose that a failure occurs. In this instance, the washing machine control unit 160 may diagnose that a failure occurs in the water supply according to a diagnostic program, and display an error code E51 corresponding to the failure in the water supply through the control panel 120. In addition, the washing machine control unit 160 may output an error occurrence sound set in advance.

In addition, the washing machine control unit 160 may accumulate and record, in the usage log, the error code (E51), a failure occurrence time (2012-03-15 10:49:00), and the type (program) of operation information.

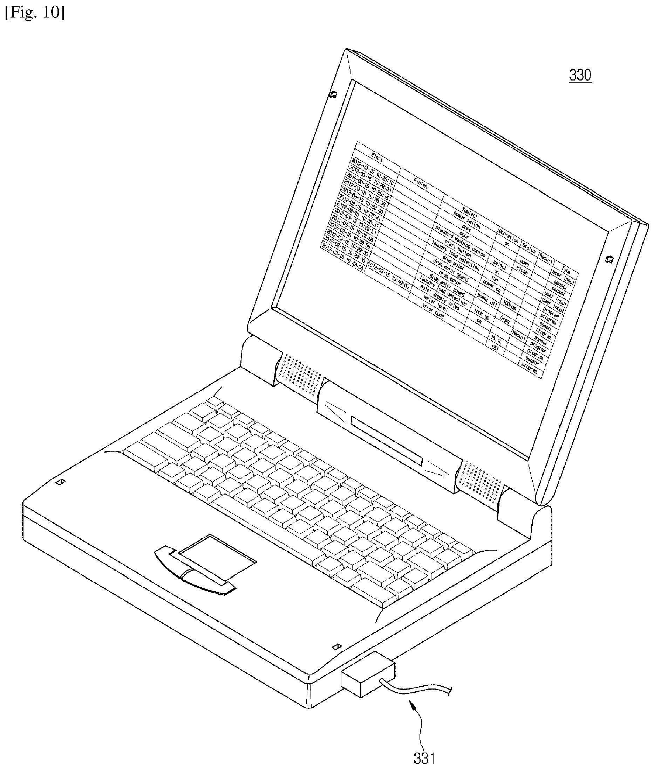

FIG. 10 is a view showing a repair terminal that receives a usage log.

As described above, the operation information generated in the washing process before the occurrence of the failure is all stored in the usage log, and therefore a service engineer can accurately diagnose the cause of a failure based on the usage log, and repair the failure.

The diagnostic terminal 330 of the service engineer and the washing machine 10b are connected to each other through the communication interface 110, and therefore the usage log can be transmitted to the diagnostic terminal 330. For example, as shown in FIG. 10, serial ports of the diagnostic terminal 330 and the washing machine 10b may be connected to each other by a serial connector 331, and the washing machine 10b may transmit failure information including the usage log to the repair terminal in response to a request of the repair terminal.

The usage log transmitted from the washing machine 10b may be displayed on a screen of the diagnostic terminal 330 as shown in FIG. 10, so that the usage log can be provided to the service engineer. The service engineer may easily and rapidly determine the cause of the failure based on the usage log provided through the diagnostic terminal 330, and thereby take measures corresponding to the cause of the failure.

Specifically, even when the causes of the failure appear different, the same failure may be caused. For example, a water supply abnormality may occur by the cause of the failure such as an error of the control program included in the firmware, a failure of the water level sensor, a low water pressure, or the like.

A failure occurrence state may be determined based on the usage log with information about the failure occurrence state recorded therein to thereby analyze an accurate cause of the failure, and therefore it is possible to readily diagnose the cause of the failure of the home appliance 10. In addition, the failure occurrence state is not required to be reproduced, and therefore it is possible to reduce a time required for diagnosis and a repair of the cause of the failure. In addition, even when the failure occurrence state is not reproduced, it is possible to accurately diagnose the cause of the failure.

Meanwhile, when a failure occurs, the washing machine control unit 160 may transmit failure information to the failure management device 200 through the communication unit 110 of the washing machine 10b.

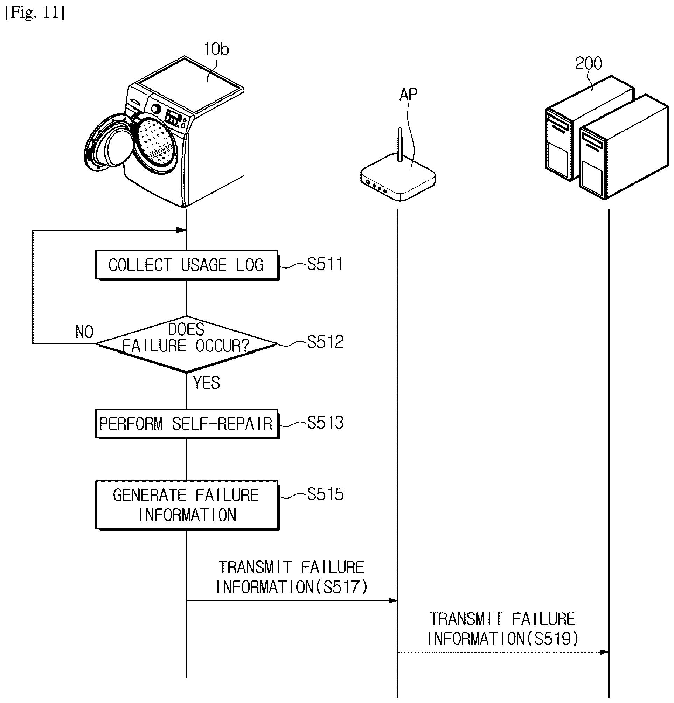

Hereinafter, transmission of failure information will be described in detail with reference to FIG. 11.

FIG. 11 is a flowchart showing an example of transmission of failure information.

As shown in FIG. 11, in step S511, the washing machine control unit 160 may collect a usage log based on operation information generated in a washing process. In step S512, the washing machine control unit 160 determines whether a failure occurs.

In step S513, when the failure occurs, the washing machine control unit 160 performs a self-repair of the failure. Specifically, the washing machine control unit 160 may perform the self-repair based on a self-repair program. For example, the self-repair program may perform the self-repair by initializing the washing machine 10b, or perform the self-repair by guiding a repair method through the control panel 120 to a user so that the user can perform an operation for the self-repair.

When the failure is repaired by such a self-repair method, failure information may be terminated without being transmitted. However, in step S515, when the failure is not repaired even through the self-repair, the washing machine control unit 160 generates the failure information. Specifically, the washing machine control unit 160 may generate the failure information using the usage log, identification information, or the like before the failure occurs. In addition, the washing machine control unit 160 may perform debugging and record debugging information in the usage log.

In addition, the washing machine control unit 160 may collect identification information such as an ID of the washing machine 10b, or the like.

In addition, the washing machine control unit 160 may compress or process the collected failure information in the form suitable for transmission to the failure management device 200 through the communication unit 110 of the washing machine 10b.

In this manner, the failure information generated by the washing machine 10b may be transmitted to an access point AP that forms a home network in step S517, and the access point AP may transmit the failure information to the failure management device 200 through a communication network N in step S519.

Meanwhile, in FIG. 11, an example of transmission of the failure information is shown, and a method of transmitting the failure information is not limited thereto. For example, as shown in FIG. 2, when the home network is formed by the user terminal 310, the failure information generated by the washing machine 10b may be transmitted to the user terminal 310 for transmission to the failure management device 200 through the user terminal 310.

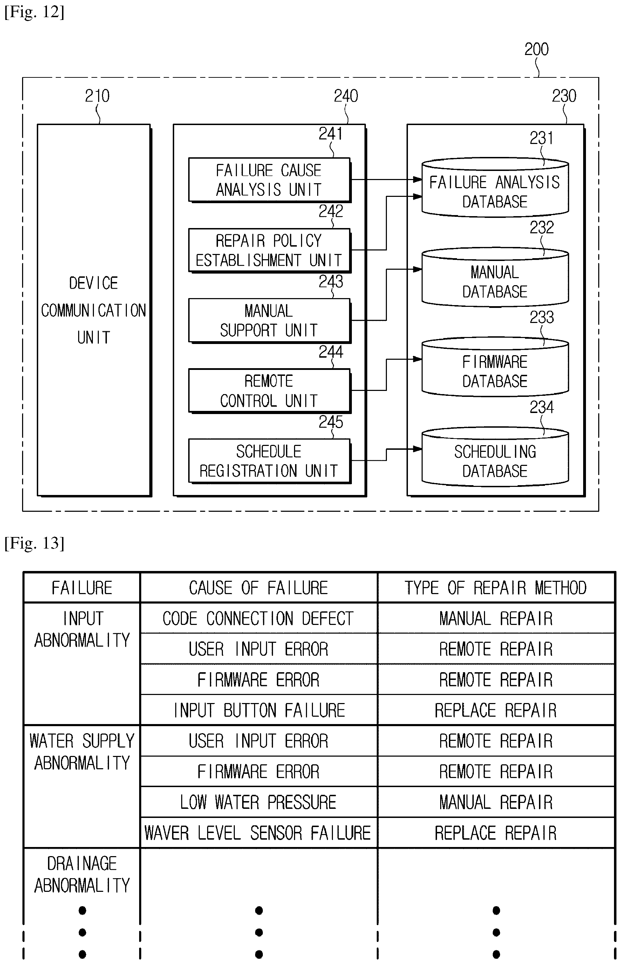

In this manner, when receiving the failure information from the home appliance 10, the failure management device 200 attempts to repair the home appliance 10 in which the failure occurs, based on the failure information. Hereinafter, the failure management device 200 of the failure management system 1 will be described in detail with reference to FIGS. 12 to 18.

FIG. 12 is a control block diagram showing a failure management device included in a failure management system according to an embodiment of the present invention.

The failure management device 200 may include a device communication unit 210 for transmitting and receiving data to and from other devices, a device storage unit 230 for storing data required for operations of a home appliance management device, and a device control unit 240 for controlling overall operations of the failure management device 200.

The device communication unit 210 may be connected to the communication network N to transmit and receive data. Specifically, the device communication unit 210 may receive failure information from the home appliance 10 or the user terminal 310, or transmit predetermined data to the home appliance 10 or the user terminal 310. In addition, the device communication unit 210 may set a control session with the home appliance 10 in which a failure occurs so that the device control unit 240 can control remotely the home appliance 10 in which the failure occurs.

The device storage unit 230 may store an operating system or an application which is required for the operations of the home appliance management device. In addition, the device storage unit 230 may analyze the cause of the failure of the home appliance 10, and store various types of information required for repairing the cause of the failure.

Specifically, the device storage unit 230 may include a failure analysis database 231. The failure analysis database 231 analyzes the cause of the failure from the failure information, and stores a repair method according to the analyzed cause of the failure.

The failure analysis database 231 may be provided for each type of the home appliance 10 or for each model of the home appliance 10, and analysis of big data may be used in generation of the failure analysis database 231.

Hereinafter, the failure analysis database 231 will be described in detail with reference to FIG. 13. FIG. 13 is a view showing an example of a failure analysis database in detail.

In FIG. 13, the failure analysis database 231 for the washing machine 10b is partially shown. As shown in FIG. 13, in the failure analysis database 231, a failure and at least one cause of the failure by which the failure is generated may be mapped, and a repair type corresponding to each cause of a failure may be also stored in the failure analysis database 231.

The cause of the failure and the repair type may be generated by analyzing big data about failures and examples of failure repair as described above.

Meanwhile, the failure analysis database 231 may also store the repair type of each cause of a failure. Here, the repair type may be classified according to a failure repair performing type of the cause of each failure.

Specifically, when the self-repair can be performed by a user, the cause of the failure may be classified into a manual repair type, when the failure can be restored by controlling remotely the home appliance 10, the cause of the failure may be classified into a remote repair type, and when replacement or rebuild of hardware is required, the cause of the failure may be classified into a replace repair type.

In addition, the device storage unit 230 may further include a manual database 232. The manual database 232 stores a repair manual corresponding to each cause of the failure. In this instance, the repair manual may be provided in the form of text or images, but provided in the form of voice or videos.

In addition, the device storage unit 230 may further include firmware database 233. The firmware database 233 may store firmware of each home appliance 10, and include an update history of the firmware.

In addition, the device storage unit 230 may include a scheduling database 234. The scheduling database 234 stores a hardware repair schedule. Specifically, the scheduling database 234 may register and manage a repair schedule of each home appliance 10.

Meanwhile, in FIG. 13, a case in which a plurality of databases are included in the device storage unit 230 is shown, but each database may be managed by a separate device. In FIG. 13, a case in which four databases are included in the device storage unit 230 is shown, but the present invention is not limited thereto. The four databases may be divided into a smaller unit to be managed, or united together to be managed.

The device control unit 240 analyzes the cause of the failure of the home appliance 10 based on the failure information. The device control unit 240 may determine a specific failure of the home appliance 10 based on the failure information, and analyze at least one cause of the failure by which the determined failure is generated.

In addition, the device control unit 240 may classify each repair method of the analyzed at least one cause of the failure according to the repair type, and attempt to repair the failure of the home appliance 10 according to the repair type.

For this, the device control unit 240 may further include a failure cause analysis unit 241. The failure cause analysis unit 241 determines a failure of the home appliance 10 based on the failure information, and analyzes the cause of the failure by which the failure is generated.

Specifically, the failure cause analysis unit 241 may determine the failure of the home appliance 10 based on the usage log included in the failure information. For example, the failure cause analysis unit 241 may determine the failure of the home appliance 10 based on an error code included in the usage log. As described above, the home appliance 10 may self-diagnose a failure state to generate the error code. The failure of the home appliance 10 may be mapped to such an error code, and therefore the failure of the home appliance 10 may be determined based on the error code.

Meanwhile, a case in which the failure cause analysis unit 241 determines the failure has been described, but the home appliance 10 may self-analyze the failure to transmit information about the failure together with the failure information.

In this manner, when the failure is included in the failure information, the failure cause analysis unit 241 may immediately determine the failure based on the failure information.

In addition, the failure cause analysis unit 241 analyzes at least one cause of the failure by which the failure can be generated, based on the failure. In this instance, the usage log of the failure information may be used in analyzing the cause of the failure.

For example, the failure cause analysis unit 241 may determine whether a software defect such as firmware error or the like is the cause of the failure based on debugging information or input information. That is, the failure cause analysis unit 241 may determine whether the debugging information or the input information is normal information, and analyze that the failure is caused by the software defect when the debugging information or the input information is abnormal information.

In addition, the failure cause analysis unit 241 may determine whether a hardware defect is the cause of the failure based on the usage log. In general, the individual components of the home appliance 10 have a corresponding life expectancy. The failure cause analysis unit 241 may determine whether the hardware defect is the cause of the failure based on the life expectancy of the individual components.

Thus, the failure cause analysis unit 241 may analyze a driving history of the home appliance 10 such as a driving frequency, a driving time, or the like of the home appliance 10 based on the usage log, and determine whether the hardware defect occurs by comparing the analyzed driving history and the life expectancy of the components.

In addition, the failure cause analysis unit 241 may analyze the cause of the failure due to a defective state of the home appliance 10 based on the usage log. In order for the home appliance 10 to be normally operated, the home appliance 10 should be in a normal state.

However, when the state of the home appliance 10 is defective, the failure may be generated in the home appliance 10. For example, even when the state of the home appliance 10 is defective such as in a case in which a water supply reservoir that supplies water is frozen, a case in which a water pressure of supply water is low, or the like, a water supply abnormality may occur.

Thus, the failure cause analysis unit 241 may analyze the cause of the failure due to a defective state corresponding to the failure.

As described above, the failure cause analysis unit 241 may individually analyze the cause of the failures, but analyze the cause of the failures based on the failure analysis database 231 in which the failure and the cause of the failure are stored.

That is, the failure cause analysis unit 241 may analyze the cause of the failures by searching for at least one cause of the failure corresponding to the failure in the failure analysis database 231.

In this instance, the failure cause analysis unit 241 may analyze the actual cause of the failure based on a plurality of causes of the failure searched for in the failure analysis database 231. That is, the failure cause analysis unit 241 may analyze the actual cause of the failure by determining whether the plurality of causes of the failure searched for based on the usage log are actually generated.

For example, as shown in FIG. 13, as to a water supply abnormality, freezing of a water supply reservoir, a user input error, firmware error, clogging of a water supply filter, a failure of the water level sensor, or the like may be searched for as the cause of the water supply abnormality.

The failure cause analysis unit 241 may analyze whether each cause of the failure searched for based on the failure information is the actual cause of the failure.

Specifically, whether the user input error is an actual cause of the water supply abnormality may be determined based on input information recorded in the usage log, and whether the firmware error is the actual cause of the water supply abnormality may be determined based on the debugging information recorded in the usage log.

In addition, whether the failure of the water level sensor is the actual cause of occurrence of the water supply abnormality may be determined based on the usage log.

In addition, when the software defect such as the firmware error or the user input error or the hardware defect such as the failure of the water level sensor is not the actual cause of the failure, the failure cause analysis unit 241 may determine that the freezing of the water supply reservoir or the clogging of the water supply filter is the actual cause of the failure.

In this manner, the cause of the failure may be analyzed based on the usage log, and therefore the failure management device may accurately and rapidly diagnose the cause of the failure. In addition, the cause of the failure may be analyzed using a failure diagnostic database generated by big data, and therefore it is possible to more accurately diagnose the cause of the failure.

In addition, the device control unit 240 may further include a repair policy establishment unit 242. The repair policy establishment unit 242 may classify a repair type according to the cause of the failure analyzed by the failure cause analysis unit 241, and establish a repair policy according to the classified type of the repair method.

Specifically, when the cause of the failure is generated due to a defective state of the home appliance 10 so that the failure can be simply self-repaired by a user, the repair policy establishment unit 242 may classify the cause of the failure into a manual repair type.

In addition, when the cause of the failure is generated due to the software defect so that the failure can be repaired by remote control, the repair policy establishment unit 242 may classify the cause of the failure into a remote repair type, and when the cause of the failure is generated due to the hardware defect so that registration of a repair schedule is required, the repair policy establishment unit 242 may classify the cause of the failure into a replace repair type.

In this manner, the repair policy may be established by classifying the cause of the failure according to the repair type, thereby providing an optimum recovery solution.

Meanwhile, the repair type and the specific repair method may be mapped in the failure analysis database 231 together with the cause of the failure to be stored therein as shown in FIG. 13, and when the repair type is also stored in the failure analysis database 231, the repair policy establishment unit 242 may determine the repair type through the failure analysis database 231.

In this manner, when the repair policy is established by the repair policy establishment unit 242, a repair of the home appliance 10 is attempted according to the repair policy. Specifically, the repair of the home appliance 10 may be performed by a manual support unit 243, a remote control unit 244, or a schedule registration unit 245.

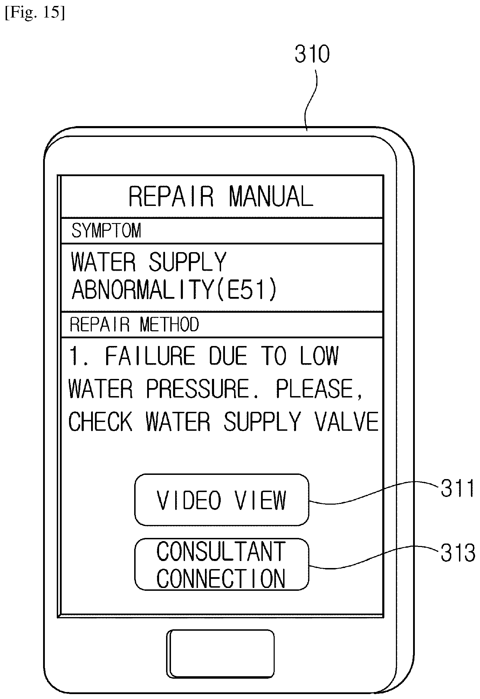

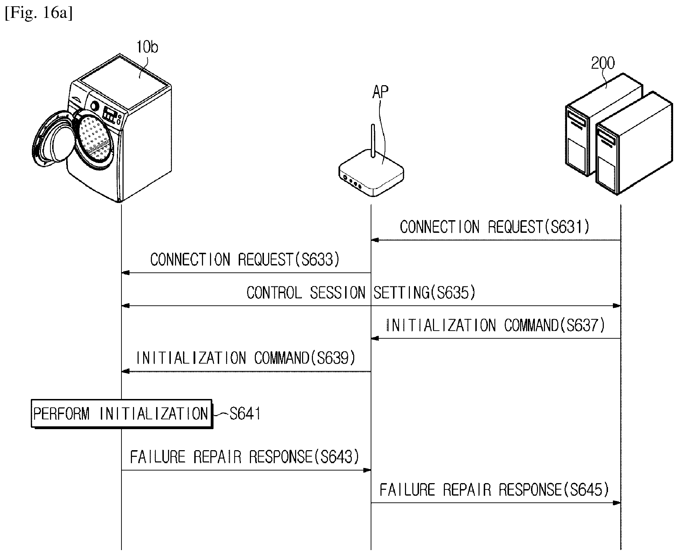

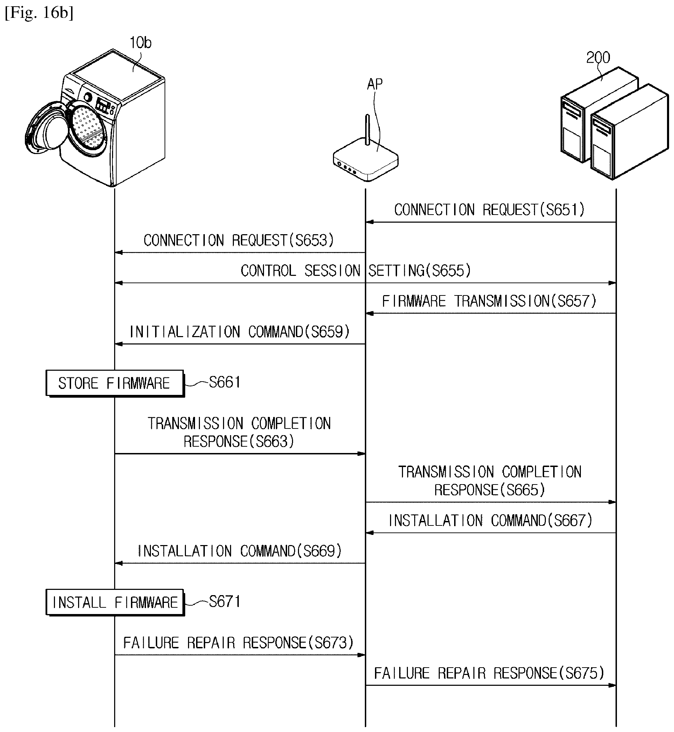

The manual support unit 243 may support manual repair by transmitting a repair manual for failure repair to the user terminal 310. Hereinafter, manual repair will be described in detail with reference to FIGS. 15 and 16.

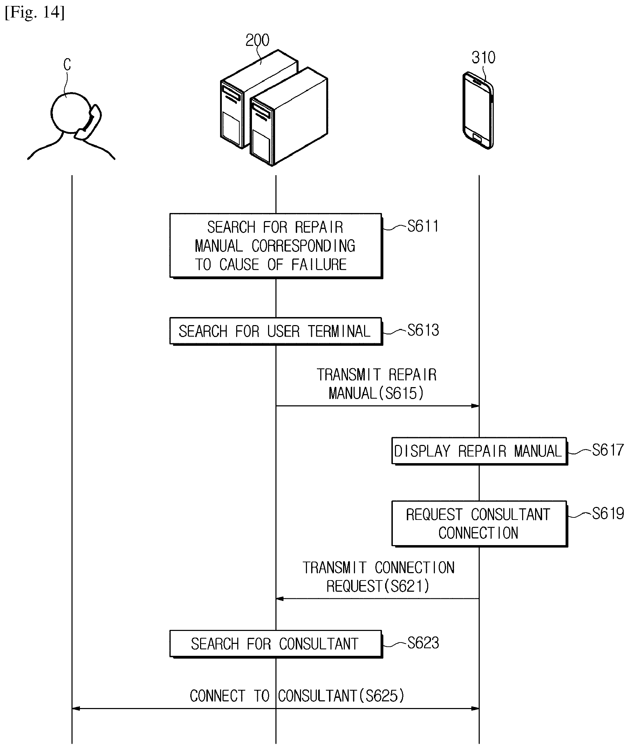

FIG. 14 is a flowchart showing an example of manual repair in detail, and FIG. 15 is view showing an example of a screen of a user terminal in which a repair manual is displayed.

Referring to FIGS. 13, 15, and 16, in step S611, the manual support unit 243 of the failure management device 200 searches for a repair manual corresponding to the cause of a failure. Specifically, the manual support unit 243 may search for a repair manual corresponding to the cause of the failure that is analyzed by the failure cause analysis unit 241 among repair manuals stored in the manual database 232.

For example, when it is determined that the cause of the failure is a low water pressure, the manual support unit 243 may search for a repair manual for the low water pressure. For example, the repair manual for the low water pressure may provide a repair method such as an appropriate measure for thawing a water supply reservoir or cleaning of a water supply filter.

In step S613, the manual support unit 243 searches for a user terminal 310 to which the repair manual is to be transmitted. In order to provide the repair manual to a user, it is necessary to specify the user terminal 310 that receives the repair manual. Thus, the manual support unit 243 may search for information about the user terminal 310 of the home appliance 10 in which the failure occurs.

For this, the information about the user terminal 310 which is mapped with the home appliance 10 may be stored in the device storage unit 230, or the manual support unit 243 may search for the user terminal 310 based on user information of a home network including the home appliance 10 in which the failure occurs. In addition, the manual support unit 243 may search for the user terminal 310 that is formed in the same home network as that of the home appliance 10 in which the failure occurs.

Meanwhile, hereinafter, a case in which the repair manual is transmitted to the user terminal 310 will be described, but the present invention is not limited thereto. For example, the repair manual may be provided to the home appliance 10 or a device (for example, a television 10a of FIG. 1) that can transmit the repair manual to a user among other devices existing in the same home network as that of the home appliance 10 in which the failure occurs.

In step S615, the manual support unit 243 may transmit the searched manual to the searched user terminal 310. In this instance, the manual support unit 243 may determine a type of the manual to be transmitted to the user terminal 310 in consideration of the performance of the searched user terminal 310. For example, when the performance of the user terminal 310 is insufficient for displaying videos, the repair manual provided in the form of text, images, or voice may be transmitted.

Meanwhile, in step S 617, the user terminal 310 to which the repair manual has been transmitted outputs the manual. In this instance, the user terminal 310 may determine an output method of the repair manual according to the type of the repair manual.

For example, as shown in FIG. 15, the repair manual may be provided. Specifically, the user terminal may display a failure ("water supply abnormality (E51)") and a repair method ("failure due to low water pressure. Please, check water supply valve").

In addition, the user terminal may further display a video view icon 311 and a consultant connection icon 313. When a user selects the video view icon 311, the user terminal may provide the repair manual in the form of a video. In this manner, it is possible to provide user convenience by providing the repair manual through the user terminal 310.

When repair to be performed is difficult according to the repair manual, the user may request a consultant C connection through the user terminal 310.

In this manner, when a request for the consultant C connection is input from the user in step S619, the user terminal 310 may transmit the request for consultant C connection to the failure management device 200 in step S621. For example, when the user selects the consultant connection icon 313, the consultant connection may be requested.

The manual support unit 243 may search for a consultant C to be connected with the user terminal 310 in response to the connection request of the user terminal 310 in step S623, and connect the searched consultant C and the user terminal 310 in step S625. In this instance, the manual support unit 243 may provide failure information, a failure, the cause of a failure, and the like to the searched consultant C.

In this manner, by providing the failure information, the failure, the cause of the failure, and the like to the searched consultant C, it is possible for the consultant C to provide information required for failure repair without repeatedly checking the failure.

Meanwhile, in FIG. 16, an example in which a repair manual is provided to a user is shown, and a method of providing the repair manual is not limited thereto. For example, the repair manual may be provided to the home appliance 10 rather than the user terminal 310, and the home appliance 10 may provide the repair manual to the user through the appliance output unit 13.

In addition, a user U may request consultant connection through the home appliance 10, and the manual support unit 243 may search for a consultant in response to the request of the home appliance 10 to connect the home appliance 10 and the searched consultant.

The remote control unit 244 attempts to remotely repair the failure by controlling remotely the home appliance 10. Hereinafter, a remote repair will be described in detail with reference to FIG. 16. FIG. 16 is a flowchart showing an example of the remote repair in detail.

As shown in FIG. 16a, the failure management device 200 may remotely control initialization of the home appliance 10.

Specifically, the failure management device 200 may request a connection for remote control from an access point AP in step S631, and the connection request for remote control may be transmitted to the washing machine 10b through the access point AP in step S633.

When a control session is set between the washing machine 10b and the failure management device 200 according to the connection request in step S635, the failure management device 200 transmits an initialization command to the access point AP through the control session in step S637, and the access point AP transmits the transmitted initialization command to the washing machine 10b.

In step S641, the washing machine 10b having received the initialization command performs initialization in step S641. Here, initialization may refer to changing a state of the washing machine 10b into an initial state. When initialization is performed, firmware may be changed into an initial setting, a sensor provided in the washing machine 10b may be also changed into an initial setting, and the individual components of the washing machine 10b such as the drum motor 40, the water supply valve 52, the drainage pump 62, and the like may be changed into reference positions.

Initialization of the washing machine 10b may be performed by the washing machine control unit 160, and even when the start of initialization is prevented by firmware of the washing machine 10b, the appliance control unit 17 may be forced to perform initialization.

When initialization is completely performed, the washing machine 10b transmits a failure repair response to the access point AP in step S643, and the access point AP transmits the failure repair response having been received from the washing machine 10b to the failure management device 200 in step S645.

As shown in FIG. 16b, the failure management device 200 may remotely update the firmware of the home appliance 10.

Specifically, the failure management device 200 requests a connection for remote control from the access point AP in step S651, and the connection request for remote control is transmitted to the washing machine 10b through the access point AP in step S653.

When a control session is set between the washing machine 10b and the failure management device 200 in response to the connection request in step S655, the failure management device 200 transmits the latest version of firmware to the access point AP through the control session in step S657, and the access point AP transmits the received latest version of firmware to the washing machine 10b in step S659.

In step S661, the washing machine 10b having received the firmware stores the firmware. When the firmware is normally stored, the washing machine 10b transmits a firmware transmission completion response to the access point AP in step S663, and the access point AP transmits the firmware transmission completion response having been received from the washing machine 10b, to the failure management device 200 in step S665.

In step S667, the failure management device 200 having received the firmware transmission completion response may transmit a firmware installation command to the access point AP. In step S669, the access point AP transmits the firmware installation command having been received from the failure management device 200, to the washing machine 10b.

In step S671, the washing machine 10b having received the firmware installation command performs firmware installation. In this instance, the previous version of firmware may be backed up, and in order to prevent the usage log from being deleted due to the firmware installation, the usage log may be also backed up. The usage log which is backed up after installation of the latest version of firmware is completed may be recovered again.

When installation of the firmware is completed, the washing machine 10b performs initialization, and when initialization is completely performed, the washing machine 10b transmits a failure repair response to the access point AP in step S673. Next, the access point AP transmits the failure repair response having been received from the washing machine 10b, to the failure management device 200 in step S675.

Meanwhile, an example of the remote repair is described in FIG. 16, but the repair method is not limited thereto. For example, the failure management device 200 may arrange components of the home appliance 10 to reference positions through remote control, and a more complex control may be performed in order to repair a corresponding failure.

In addition, although not shown in FIG. 10, the remote repair method may further include receiving a predetermined authentication from a user for the purpose of remote control. For example, the remote repair method may further include receiving the predetermined authentication from the user together with a remote control connection, or only when the predetermined authentication is allowed through the user terminal 10, the remote control connection may be allowed.

A schedule registration unit 245 may manage a schedule for a repair of the home appliance 10 in which a failure occurs. The schedule registration unit 245 may provide repair schedule information capable of being registered in the user terminal 310 with reference to the scheduling database 234, and update the scheduling database 234 according to a schedule selected by a user through the user terminal 310.

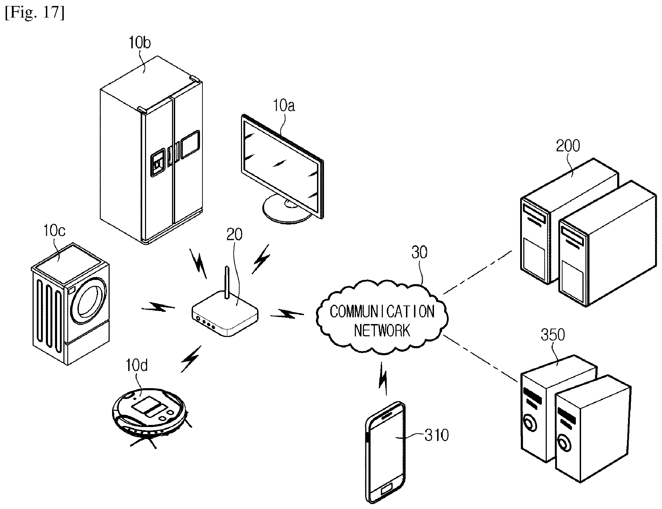

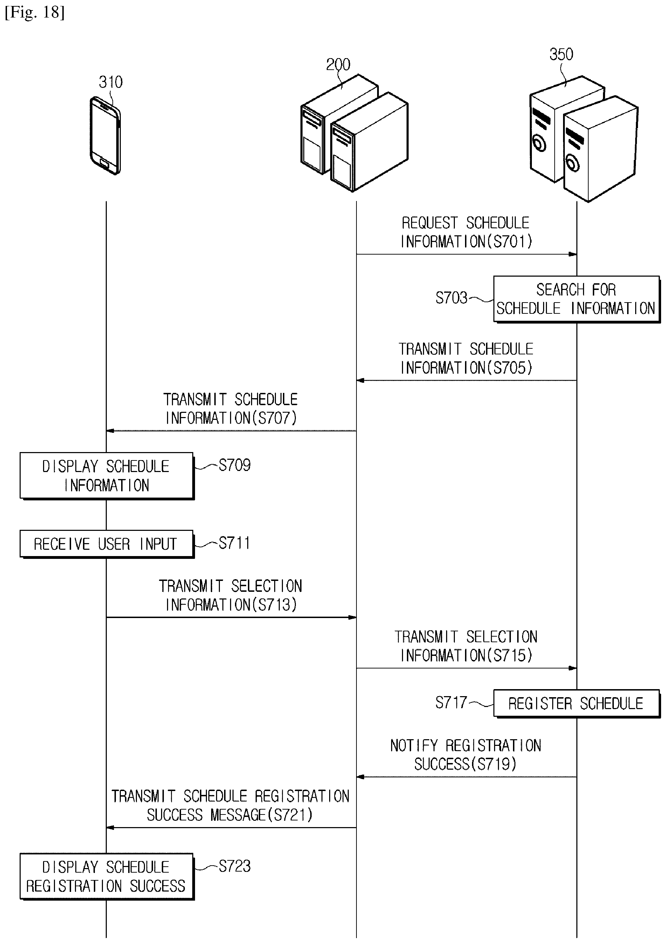

Meanwhile, in FIG. 13, an example in which the failure management device 200 includes the scheduling database 234 is shown, but the present invention is not limited thereto. Hereinafter, schedule registration in the failure management system 1 in which the scheduling database 234 is provided in a separate device will be described in detail with reference to FIGS. 17 and 18.

FIG. 17 is a schematic view showing a failure management system according to another embodiment of the present invention, and FIG. 18 is a flowchart showing schedule registration in a failure management system according to another embodiment of the present invention.

As shown in FIG. 17, the failure management system may further include a service management device. The service management device may totally manage a schedule for a repair of the home appliance 10. For this, the service management device may include the scheduling database 234.

In this instance, the failure management device 200 may register the repair schedule by meditating between the service management device and the user terminal 310. Hereinafter, schedule registration will be described in detail with reference to FIG. 12.

As shown in FIG. 18, in step S710, the schedule registration unit 245 of the failure management device 200 requests schedule information from the service management device.

The service management device having received the request for the schedule information may search for the schedule information required for service registration in step S703, and transmit the searched schedule information to the failure management device 200 in step S705.

In step S707, the failure management device 200 transmits the schedule information having been received from the service management device, to the user terminal 310.

Next, the user terminal 310 displays the schedule information having been received from the failure management device 200 to a user in step S709, and receives a user input for schedule registration in step S711. Next, the user terminal 310 transmits selection information according to the user input to the failure management device 200 in step S713, and the failure management device 200 transmits the selection information to the service management device again in step S715.

The service management device registers a schedule based on the received selection information in step S717, and transmits a schedule registration success notification to the failure management device 200 in step S719 when the schedule is successfully registered.

In step S721, the failure management device 200 having received the schedule registration success notification generates a schedule registration success message and transmits the generated schedule registration success message to the user terminal 310.

Next, in step S723, the user terminal 310 having received the schedule registration success message displays the schedule registration success.

Meanwhile, as shown in FIG. 14, a plurality of causes of a failure by which the failure is generated may be analyzed. That is, when at least one of the plurality of causes of the failure is generated, a specific failure may be generated.

For example, an input abnormality may occur by at least one cause of a code connection defect of the washing machine 10b, a user input error, firmware error, and an input button defect, and when at least one cause of a user input error of the washing machine 10b, firmware error, a low water pressure, and a defect of the water level sensor for measuring the water level of washing water is generated, a water supply abnormality of washing water may occur.

In this manner, when the number of causes of the failure to be analyzed is a plurality, the repair policy establishment unit 242 may classify a repair method corresponding to the plurality of causes of the failure according to the repair type, and establish a repair policy so that the repair can be sequentially performed according to the repair type.

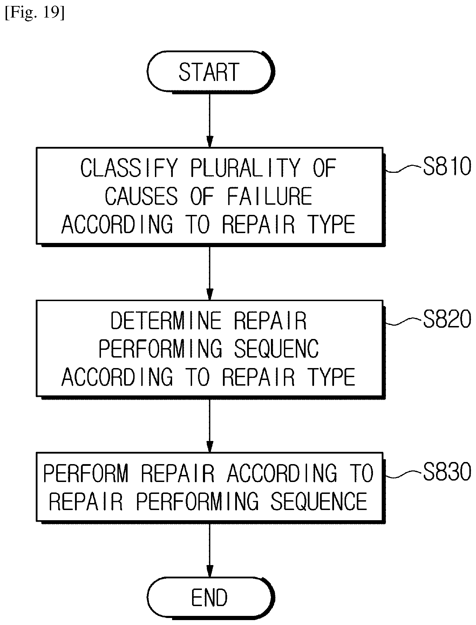

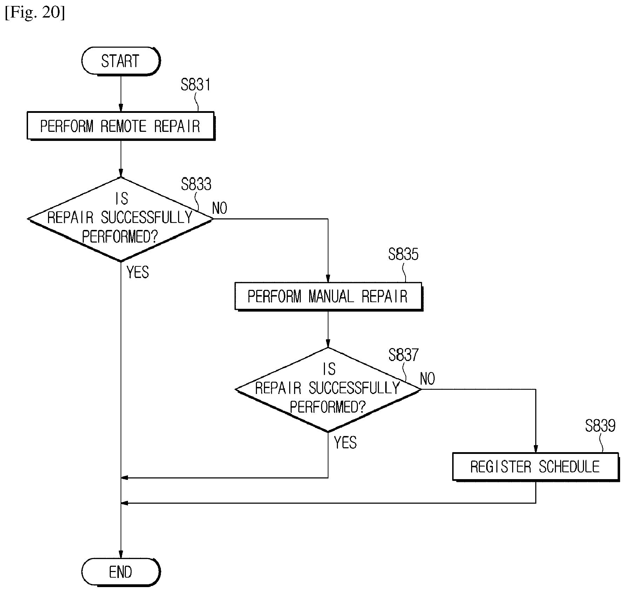

Hereinafter, establishment of a repair policy will be described in detail with reference to FIGS. 19 and 20.

FIG. 19 is a flowchart showing repair policy establishment in detail, and FIG. 20 is a flowchart showing an example of step S830 of FIG. 19 in detail.

As shown in FIG. 19, in step S810, the repair policy establishment unit 242 classifies a plurality of causes of a corresponding failure according to a repair method.

For example, when the cause of the failure of water supply abnormality of the washing machine 10b is analyzed as one of clogging of the water supply filter, firmware error, and a failure of the water level sensor, the repair policy establishment unit 242 may classify the clogging of the water supply filter that can be simply self-repaired by a user into a manual repair type, classify the firmware error that can be restored by remote control into a remote repair type, and classify the failure of the water level sensor for which a replacement or rebuild of hardware is required into a replace repair type.

In step S820, the repair policy establishment unit 242 may determine a repair performing sequence according to the repair type of the repair method. In this instance, the repair performing sequence may be determined according to a predetermined reference. For example, as to the repair performing sequence, the remote repair, manual repair, and replace repair may be performed in the stated order in consideration of convenience of the user, but the present invention is not limited thereto. For example, the manual repair, remote repair, and replace repair may be performed in the stated order.

In addition, according to occurrence frequencies of a plurality of causes of the failure, the repair method corresponding to the cause of the failure having a high occurrence frequency may be first performed.

In step S830, the device control unit 240 may perform a repair according to the repair performing sequence. Hereinafter, an example of repair performing will be described in detail with reference to FIG. 20.

As shown in FIG. 20, the device control unit 240 may attempt to perform a repair according to the repair performing sequence established by the repair policy establishment unit 242. Specifically, in step S831, the remote control unit 244 attempts to perform the repair by remotely controlling the home appliance 10 according to the repair performing sequence.

When the repair is successfully performed according to the remote repair attempt in YES of step S833, the device control unit 240 completes the repair. Meanwhile, when the repair is unsuccessfully performed according to the remote repair attempt in NO of step S833, the manual support unit 243 attempts to perform manual repair in step S835. In this instance, the manual support unit 243 may provide a repair manual corresponding to the cause of the failure to the user terminal 310.

When the repair is successfully performed according to the manual repair attempt in YES of step S837, the device control unit 240 completes the repair. Meanwhile, when the repair is unsuccessfully performed according to the manual repair attempt in NO of step S837, the schedule registration unit 245 registers a schedule for failure repair in step S839. For this, information for schedule registration may be transmitted to the user terminal 310.

Meanwhile, the schedule registration unit 245 may register at least one piece of information of failure information, a failure, an analyzed cause of a failure, and results of remote repair or manual repair together with a repair schedule. In this manner, the information related to failure and repair stored together with the schedule may be provided to the service engineer to enable a rapid repair.

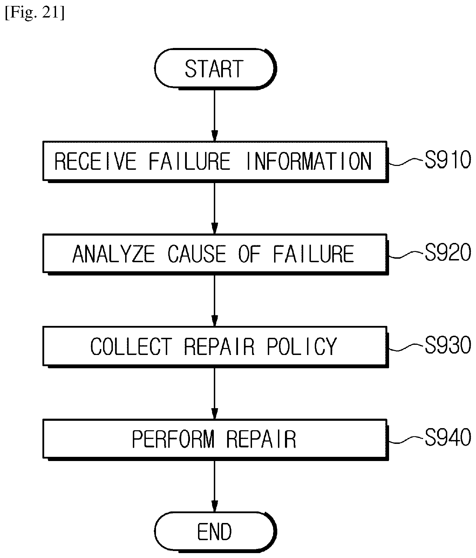

FIG. 21 is a flowchart showing a failure management method according to an embodiment of the present invention in detail.

As shown in FIG. 21, in step S910, the failure management device 200 receives failure information. Specifically, the home appliance 10 in which a failure occurs may generate the failure information, and the failure information generated by the home appliance 10 may be transmitted to the failure management device 200 through a communication network N.

In step S920, the failure management device 200 analyzes the cause of a failure based on the failure information. In this instance, the failure management device 200 may determine a failure of the home appliance 10 based on the failure information, and analyze at least one cause of the failure based on the failure. In this instance, the usage log may be used in analyzing the cause of the failure.

For example, whether a software defect such as firmware error is the cause of the failure may be analyzed based on a debugging log or an input log, or whether a hardware defect is the cause of the failure may be analyzed based on a driving log.

In step S930, the failure management device 200 classifies a repair type of a repair method according to the cause of the failure, and establishes a repair policy according to the classified repair type.

Specifically, when the cause of the failure is generated due to a defective state of the home appliance 10 so that self-repair can be simply performed by a user, the corresponding cause of the failure may be classified into a manual repair type, when the cause of the failure is generated due to a software defect or the like so that repair can be performed by remote control, the corresponding cause of the failure cause may be classified into a remote repair type, and when the cause of the failure is generated due to a hardware defect or the like so that registration of a repair schedule is required, the cause of the failure cause may be classified into a replace repair type.

In this instance, when the number of causes of the failure to be analyzed is a plurality, each cause of the failure may be classified according to the repair type.

In addition, when the number of repair types corresponding to each cause of the failure is a plurality, a repair policy may be established in such a manner that repair is sequentially performed. The repair performing sequence may be determined according to a predetermined reference.

In step S940, the failure management device 200 performs repair according to the repair policy. Specifically, the failure management device 200 may attempt to repair the failure of the home appliance 10 by sequentially performing at least one repair method of the manual repair, the remote repair, and the replace repair according to the repair policy.

The methods according to various embodiments of the present invention may be implemented in the form of a program command that can be performed by various computer unit and recorded in a computer-readable recording medium. The computer-readable recording medium may separately include program commands, local data files, local data structures, etc. or include a combination of them. The medium may be specially designed and configured for the present invention, or known and available to those of ordinary skill in the field of computer software. Examples of the computer-readable recording medium include magnetic media, such as a hard disk, a floppy disk, and a magnetic tape, optical media, such as a CD-ROM and a DVD, magneto-optical media, such as a floptical disk, and hardware devices, such as a ROM, a RAM, and a flash memory, specially configured to store and perform program commands. Examples of the program commands may include high-level language codes executable by a computer using an interpreter, etc. as well as machine language codes made by compilers.

While the invention has been shown and described with reference to certain exemplary embodiments thereof, it will be understood by those skilled in the art that various changes in form and details may be made therein, the invention being defined by the appended claims.

## Claims

1. A home appliance (10) integrally comprising:
an operation unit (12) that receives control commands;
a sensor unit (14) that detects a status of the home appliance (10);
a control unit (17) that outputs a control signal so that the home appliance (10) is operated according to the control command; and
a driving unit (16) that is operated according to the control signal,
**characterized in that**
the home appliance further integrally includes a communication interface (110) configured to transmit a usage log automatically to an external and remotely provided failure management server (200), the communication interface (110) including a communication unit (11) that communicates with the failure management server (200), wherein the communication unit (11) is connected to the failure management server (200) to transmit and receive data to and from the failure management server (200) directly via an access point (AP) connected to a communication network (N),
wherein the control unit (17) manages the usage log by accumulating and recording operation information that includes input information of a control command of a user which is input to the usage log through the operation unit (12), status information of the home appliance (10) which is detected by the sensor unit (14), and driving information performed according to a driving program, wherein a generation time together with the operation information is recorded in the usage log,
wherein, when a failure occurs,
the control unit (17) automatically transmits failure information including the usage log to a failure management server (200) directly via the access point (AP) connected to the communication network (N) to request remote control for a repair of the failure, and
the communication unit (11) sets a control session in order to reveive a predetermined control command from the failure management device (200).

2. The home appliance (10) of claim 1, wherein the control unit (17) accumulates and records, in the usage log, information about driving performed according to a predetermined program.

3. The home appliance (10) of claim 1, wherein the control unit (17) accumulates and records the at least one information until a failure occurs.

4. The home appliance (10) of claim 1, wherein the control unit (17) is turned on and initializes the usage log.

5. The home appliance (10) of claim 1, wherein the control unit (17) manages the usage log to a predetermined size.

6. The home appliance (10) of claim 5, wherein the control unit (17) manages the usage log to a predetermined size according to a first-in first-out (FIFO) method.

7. The home appliance (10) of claim 1, further comprising:
a storage unit (15) that stores the usage log.

8. The home appliance (10) of claim 1, wherein the control unit (17) stores the usage log when a failure occurs.

9. The home appliance (10) of claim 1, wherein the communication interface (110) includes a communication unit (11) that communicates with the other device (200, 310, 330) in at least one method of a wired communication method, a wireless communication method, and a short-range communication method.

10. The home appliance (10) of claim 1, wherein the communication interface (110) further includes a communication port (114) for connection with the other device (200, 310, 330).

11. The home appliance (10) of claim 1, wherein the control unit (17) transmits failure information to a user terminal (310) or a diagnostic device connected through the communication interface (110).

12. The home appliance (10) of claim 1, wherein the control unit (17) is connected to a failure management server (200) positioned in a remote location through the communication interface (110), and transmits the usage log to the failure management server (200).

13. The home appliance (10) of claim 11, further comprising:
an information providing unit that outputs a failure repair manual to a user,
wherein, when a failure occurs, the control unit (17) transmits the usage log to the failure management server (200) to request the failure repair manual corresponding to the failure.

14. A control method for a home appliance (10) comprising:
receiving control commands;
detecting a status of the home appliance (10); and
providing a communication interface (110) integrally within the home appliance being configured to transmit a usage log automatically to an external and remotely provided failure management server (200), the communication interface (110) including a communication unit (11) that communicates with the failure management server (200), wherein the communication unit (11) is connected to the failure management server (200) to transmit and receive data to and from the failure management server (200) directly via an access point (AP) of a communication network (N),
managing a usage log by accumulating and recording operation information that includes input information of a control command of a user which is input to the usage log through the operation unit (12), status information of the home appliance (10) which is detected by the sensor unit (14), and driving information performed according to a driving, wherein a generation time together with the operation information is recorded in the usage log,
wherein, when a failure occurs,
automatically transmitting failure information including the usage log to a failure management server (200) directly via the access point (AP) of the communication network (N) to request remote control for a repair of the failure, and
setting a control session in order to reveive a predetermined control command from the failure management device (200).

15. The control method of claim 14, wherein the managing of the usage log includes accumulating and recording information about control performed according to a predetermined program.

16. The control method of claim 14, wherein the managing of the usage log further includes deleting information first recorded according to a first-in first-out (FIFO) method from the usage log.

17. The control method of claim 14, further comprising:
initializing the usage log when the home appliance (10) is turned on.

18. The control method of claim 14, wherein the managing of the usage log further includes determining an occurrence of a failure.

19. The control method of claim 18, wherein the managing of the usage log further includes stopping updating of the usage log when the failure occurs.

20. The control method of claim 18, wherein the managing of the usage log further includes storing, in a storage unit (15), the usage log temporarily stored when the failure occurs.

## Patentansprüche

1. Haushaltsvorrichtung (10), einstückig umfassend:
eine Betriebseinheit (12), die Steuerbefehle empfängt;
eine Sensoreinheit (14), die einen Zustand der Haushaltsvorrichtung (10) detektiert;
eine Steuereinheit (17), die ein Steuersignal ausgibt, so dass die Haushaltsvorrichtung (10) gemäß dem Steuerbefehl betrieben wird; und
eine Ansteuereinheit (16), die gemäß dem Steuersignal betrieben wird,
**dadurch gekennzeichnet, dass**
die Haushaltsvorrichtung ferner eine Kommunikationsschnittstelle (110) einstückig einschließt, die so konfiguriert ist, dass sie ein Benutzungsprotokoll automatisch an einen externen und entfernt vorgesehenen Fehlfunktionsbehandlungsserver (200) sendet, wobei die Kommunikationsschnittstelle (110) eine Kommunikationseinheit (11) einschließt, die mit dem Fehlfunktionsbehandlungsserver (200) kommuniziert, wobei die Kommunikationseinheit (11) mit dem Fehlfunktionsbehandlungsserver (200) verbunden ist, um direkt über einen mit einem Kommunikationsnetz (N) verbundenen Zugangspunkt (AP) Daten an den Fehlfunktionsbehandlungsserver (200) zu senden und aus diesem zu empfangen,
wobei die Steuereinheit (17) das Benutzungsprotokoll verwaltet, indem sie Betriebsinformationen akkumuliert und aufzeichnet, die einschließen: Eingabeinformationen eines Steuerbefehls eines Benutzers, der mittels der Betriebseinheit (12) in das Benutzungsprotokoll eingegeben wird, Zustandsinformationen der Haushaltsvorrichtung (10), die durch die Sensoreinheit (14) detektiert werden, und Ansteuerinformationen, die gemäß einem Ansteuerprogramm ausgeführt werden, wobei eine Erzeugungszeit zusammen mit den Betriebsinformationen in dem Benutzungsprotokoll aufgezeichnet wird,
wobei, wenn eine Fehlfunktion auftritt,
die Steuereinheit (17) direkt über den mit dem Kommunikationsnetz (N) verbundenen Zugangspunkt (AP) Fehlfunktionsinformationen einschließlich des Benutzungsprotokolls automatisch an einen Fehlfunktionsbehandlungsserver (200) sendet, um eine Fernsteuerung für eine Behebung der Fehlfunktion anzufordern, und
die Kommunikationseinheit (11) eine Steuersitzung veranlasst, um einen vorgegebenen Steuerbefehl aus der Fehlfunktionsbehandlungsvorrichtung (200) zu empfangen.

2. Haushaltsvorrichtung (10) nach Anspruch 1, wobei die Steuereinheit (17) in dem Benutzungsprotokoll Informationen über ein gemäß einem vorgegebenen Programm ausgeführtes Ansteuern akkumuliert und aufzeichnet.

3. Haushaltsvorrichtung (10) nach Anspruch 1, wobei die Steuereinheit (17) die mindestens eine Information akkumuliert und aufzeichnet, bis eine Fehlfunktion auftritt.

4. Haushaltsvorrichtung (10) nach Anspruch 1, wobei die Steuereinheit (17) eingeschaltet wird und das Benutzungsprotokoll initialisiert.

5. Haushaltsvorrichtung (10) nach Anspruch 1, wobei die Steuereinheit (17) das Benutzungsprotokoll bis zu einer vorgegebenen Größe verwaltet.

6. Haushaltsvorrichtung (10) nach Anspruch 5, wobei die Steuereinheit (17) das Benutzungsprotokoll bis zu einer vorgegebenen Größe gemäß einem FIFO-Verfahren verwaltet.

7. Haushaltsvorrichtung (10) nach Anspruch 1, ferner umfassend:
eine Speichereinheit (15), die das Benutzungsprotokoll speichert.

8. Haushaltsvorrichtung (10) nach Anspruch 1, wobei die Steuereinheit (17) das Benutzungsprotokoll speichert, wenn eine Fehlfunktion auftritt.

9. Haushaltsvorrichtung (10) nach Anspruch 1, wobei die Kommunikationsschnittstelle (110) eine Kommunikationseinheit (11) einschließt, die mit der anderen Vorrichtung (200, 310, 330) in mindestens einem Verfahren aus einem drahtgebundenen Kommunikationsverfahren, einem drahtlosen Kommunikationsverfahren und einem Nahbereichskommunikationsverfahren kommuniziert.

10. Haushaltsvorrichtung (10) nach Anspruch 1, wobei die Kommunikationsschnittstelle (110) ferner einen Kommunikationsanschluss (114) zur Verbindung mit der anderen Vorrichtung (200, 310, 330) einschließt.

11. Haushaltsvorrichtung (10) nach Anspruch 1, wobei die Steuereinheit (17) Fehlfunktionsinformationen an eine Benutzerstation (310) oder eine Diagnosevorrichtung sendet, die mittels der Kommunikationsschnittstelle (110) verbunden sind.

12. Haushaltsvorrichtung (10) nach Anspruch 1, wobei die Steuereinheit (17) mittels der Kommunikationsschnittstelle (110) mit einem an einem entfernten Ort positionierten Fehlfunktionsbehandlungsserver (200) verbunden ist und das Benutzungsprotokoll an den Fehlfunktionsbehandlungsserver (200) sendet.

13. Haushaltsvorrichtung (10) nach Anspruch 11, ferner umfassend:
eine Informationsbereitstellungseinheit, die eine Fehlfunktionsbehebungsanleitung an einen Benutzer ausgibt,
wobei, wenn eine Fehlfunktion auftritt, die Steuereinheit (17) das Benutzungsprotokoll an den Fehlfunktionsbehandlungsserver (200) sendet, um die der Fehlfunktion entsprechende Fehlfunktionsbehebungsanleitung anzufordern.

14. Steuerungsverfahren für eine Haushaltsvorrichtung (10), umfassend:
Empfangen von Steuerbefehlen;
Detektieren eines Zustandes der Haushaltsvorrichtung (10); und
einstückiges Bereitstellen, innerhalb der Haushaltsvorrichtung, einer Kommunikationsschnittstelle (110), die so konfiguriert ist, dass sie ein Benutzungsprotokoll automatisch an einen externen und entfernt vorgesehenen Fehlfunktionsbehandlungsserver (200) sendet, wobei die Kommunikationsschnittstelle (110) eine Kommunikationseinheit (11) einschließt, die mit dem Fehlfunktionsbehandlungsserver (200) kommuniziert, wobei die Kommunikationseinheit (11) mit dem Fehlfunktionsbehandlungsserver (200) verbunden ist, um direkt über einen Zugangspunkt (AP) eines Kommunikationsnetzes (N) Daten an den Fehlfunktionsbehandlungsserver (200) zu senden und aus diesem zu empfangen,
Verwalten eines Benutzungsprotokolls durch Akkumulieren und Aufzeichnen von Betriebsinformationen, die einschließen: Eingabeinformationen eines Steuerbefehls eines Benutzers, der mittels der Betriebseinheit (12) in das Benutzungsprotokoll eingegeben wird, Zustandsinformationen der Haushaltsvorrichtung (10), die durch die Sensoreinheit (14) detektiert werden, und Ansteuerinformationen, die gemäß einem Ansteuern ausgeführt werden, wobei eine Erzeugungszeit zusammen mit den Betriebsinformationen in dem Benutzungsprotokoll aufgezeichnet wird,
wobei, wenn eine Fehlfunktion auftritt,
automatisches Senden von Fehlfunktionsinformationen einschließlich des Benutzungsprotokolls an einen Fehlfunktionsbehandlungsserver (200) direkt über den Zugangspunkt (AP) des Kommunikationsnetzes (N), um eine Fernsteuerung für eine Behebung der Fehlfunktion anzufordern, und
Veranlassen einer Steuersitzung, um einen vorgegebenen Steuerbefehl aus der Fehlfunktionsbehandlungsvorrichtung (200) zu empfangen.

15. Steuerungsverfahren nach Anspruch 14, wobei das Verwalten des Benutzungsprotokolls das Akkumulieren und Aufzeichnen von Informationen über ein gemäß einem vorgegebenen Programm ausgeführtes Steuern einschließt.

16. Steuerungsverfahren nach Anspruch 14, wobei das Verwalten des Benutzungsprotokolls ferner das Löschen von zuerst aufgezeichneten Informationen aus dem Benutzungsprotokoll gemäß einem FIFO-Verfahren einschließt.

17. Steuerungsverfahren nach Anspruch 14, ferner umfassend:
Initialisieren des Benutzungsprotokolls, wenn die Haushaltsvorrichtung (10) eingeschaltet wird.

18. Steuerungsverfahren nach Anspruch 14, wobei das Verwalten des Benutzungsprotokolls ferner das Bestimmen eines Auftretens einer Fehlfunktion einschließt.

19. Steuerungsverfahren nach Anspruch 18, wobei das Verwalten des Benutzungsprotokolls ferner das Stoppen der Aktualisierung des Benutzungsprotokolls, wenn die Fehlfunktion auftritt, einschließt.

20. Steuerungsverfahren nach Anspruch 18, wobei das Verwalten des Benutzungsprotokolls ferner das Speichern, in einer Speichereinheit (15), des vorübergehend gespeicherten Benutzungsprotokolls, wenn die Fehlfunktion auftritt, einschließt.

## Revendications

1. Appareil électroménager (10) comprenant de manière intégrée :
une unité de fonctionnement (12) recevant des instructions de commande ;
une unité de détection (14) détectant un état de l'appareil électroménager (10) ;
une unité de commande (17) émettant un signal de commande pour que l'appareil électroménager (10) sont actionné conformément à l'instruction de commande ; et
une unité d'entraînement (16) actionnée conformément au signal de commande,
**caractérisé en ce que**
ledit appareil électroménager comprenant en outre de manière intégrée une interface de communication (110) prévue pour transmettre automatiquement un fichier d'utilisation à un serveur de gestion des problèmes (200) prévu extérieurement et à distance, ladite interface de communication (110) comprenant une unité de communication (11) qui communique avec le serveur de gestion des problèmes (200), ladite unité de communication (11) étant reliée au serveur de gestion des problèmes (200) afin de transmettre des données au serveur de gestion des problèmes (200) et d'en recevoir de celui-ci directement par un point d'accès (AP) connecté à un réseau de communication (N),
où l'unité de commande (17) gère le fichier d'utilisation par accumulation et enregistrement d'informations de fonctionnement qui comprennent des informations d'entrée d'une instruction de commande d'un utilisateur entré dans le fichier d'utilisation par l'unité de fonctionnement (12), d'informations d'état de l'appareil électroménager (10) détecté par l'unité de détection (14), et d'informations d'entraînement exécuté conformément à un programme d'entraînement, un temps de création étant enregistré dans le fichier d'utilisation avec les informations de fonctionnement,
où, si un problème survient,
l'unité de commande (17) transmet automatiquement à un serveur de gestion des problèmes (200) des informations sur le problème comprenant le fichier d'utilisation, directement par le point d'accès (AP) connecté au réseau de communication (N) afin de demander une commande à distance pour la suppression du problème, et
l'unité de communication (11) établit une session de commande afin de recevoir une instruction de commande prédéfinie du dispositif de gestion des problèmes (200).

2. Appareil électroménager (10) selon la revendication 1, où l'unité de commande (17) accumule et enregistre dans le fichier d'utilisation des informations relatives à un entraînement exécuté conformément à un programme prédéfini.

3. Appareil électroménager (10) selon la revendication 1, où l'unité de commande (17) accumule et enregistre ladite au moins une information jusqu'à la survenue d'un problème.

4. Appareil électroménager (10) selon la revendication 1, où l'unité de commande (17) est activée et initialise le fichier d'utilisation.

5. Appareil électroménager (10) selon la revendication 1, où l'unité de commande (17) gère le fichier d'utilisation suivant une taille prédéfinie.

6. Appareil électroménager (10) selon la revendication 5, où l'unité de commande (17) gère le fichier d'utilisation suivant une taille prédéfinie conformément à un principe premier entré-premier sorti (FIFO).

7. Appareil électroménager (10) selon la revendication 1, comprenant en outre :
une unité de mémorisation (15) stockant le fichier d'utilisation.

8. Appareil électroménager (10) selon la revendication 1, où l'unité de commande (17) stocke le fichier d'utilisation si un problème survient.

9. Appareil électroménager (10) selon la revendication 1, où l'interface de communication (110) comprend une unité de communication (11) communiquant avec l'autre dispositif (200, 310, 330) suivant au moins un procédé entre un procédé de communication filaire, un procédé de communication sans fil et un procédé de communication à courte portée.

10. Appareil électroménager (10) selon la revendication 1, où l'interface de communication (110) comprend en outre un port de communication (114) pour une connexion avec l'autre dispositif (200, 310, 330).

11. Appareil électroménager (10) selon la revendication 1, où l'unité de commande (17) transmet des informations sur le problème à un terminal d'utilisateur (310) ou à un dispositif de diagnostic connecté par l'interface de communication (110).

12. Appareil électroménager (10) selon la revendication 1, où l'unité de commande (17) est reliée par l'interface de communication (110) à un serveur de gestion des problèmes (200) disposé à un emplacement distant, et transmet le fichier d'utilisation audit serveur de gestion des problèmes (200).

13. Appareil électroménager (10) selon la revendication 11, comprenant en outre :
une unité de délivrance d'informations émettant un manuel de suppression de problème pour un utilisateur,
où, si un problème survient, l'unité de commande (17) transmet le fichier d'utilisation au serveur de gestion des problèmes (200) pour demander le manuel de suppression de problème correspondant au problème.

14. Procédé de commande pour un appareil électroménager (10), comprenant :
la réception d'instructions de commande ;
la détection d'un état de l'appareil électroménager (10) ; et
la fourniture d'une interface de communication (110) intégrée à l'appareil électroménager et prévue pour transmettre automatiquement un fichier d'utilisation à un serveur de gestion des problèmes (200) prévu extérieurement et à distance, ladite interface de communication (110) comprenant une unité de communication (11) qui communique avec le serveur de gestion des problèmes (200), ladite unité de communication (11) étant reliée au serveur de gestion des problèmes (200) afin de transmettre des données au serveur de gestion des problèmes (200) et d'en recevoir de celui-ci directement par un point d'accès (AP) d'un réseau de communication (N),
la gestion d'un fichier d'utilisation par accumulation et enregistrement d'informations de fonctionnement qui comprennent des informations d'entrée d'une instruction de commande d'un utilisateur entrée dans le fichier d'utilisation par l'unité de fonctionnement (12), d'informations d'état de l'appareil électroménager (10) détecté par l'unité de détection (14), et d'informations d'entraînement exécuté conformément à un programme d'entraînement, un temps de création étant enregistré dans le fichier d'utilisation avec les informations de fonctionnement,
où, si un problème survient,
des informations sur le problème, comprenant le fichier d'utilisation, sont automatiquement transmises à un serveur de gestion des problèmes (200), directement par le point d'accès (AP) connecté au réseau de communication (N) afin de demander une commande à distance pour la suppression du problème, et
une session de commande est établie afin de recevoir une instruction de commande prédéfinie du dispositif de gestion des problèmes (200).

15. Procédé de commande selon la revendication 14, où la gestion du fichier d'utilisation comprend l'accumulation et l'enregistrement d'informations relatives à une commande exécutée conformément à un programme prédéfini.

16. Procédé de commande selon la revendication 14, où la gestion du fichier d'utilisation comprend en outre la suppression du fichier d'utilisation d'informations enregistrées en premier conformément à un principe premier entré-premier sorti (FIFO).

17. Procédé de commande selon la revendication 14, comprenant en outre :
l'initialisation du fichier d'utilisation lorsque l'appareil électroménager (10) est activé.

18. Procédé de commande selon la revendication 14, où la gestion du fichier d'utilisation comprend en outre la détermination de la survenue d'un problème.

19. Procédé de commande selon la revendication 18, où la gestion du fichier d'utilisation comprend en outre l'arrêt de la mise à jour du fichier d'utilisation lorsque le problème survient.

20. Procédé de commande selon la revendication 18, où la gestion du fichier d'utilisation comprend en outre le stockage dans une unité de mémorisation (15) du fichier d'utilisation stocké temporairement lorsque le problème survient.
